# EUROPÄISCHE PATENTSCHRIFT

(11) **EP 3 609 652 B1**
(45) Veröffentlichungstag und Bekanntmachung des Hinweises auf die Patenterteilung: **21.08.2024**
(21) Anmeldenummer: 18712823.6
(22) Anmeldetag: 13.03.2018
(51) Int. Cl.: B24B 45/00, B23D 45/16, B27B 5/32

(54) **SCHLEIFMITTELVORRICHTUNG, INSBESONDERE SCHLEIFTELLERVORRICHTUNG ODER STÜTZTELLERVORRICHTUNG**
GRINDING MEANS DEVICE, IN PARTICULAR GRINDING-DISC DEVICE OR BACKUP-PAD DEVICE
DISPOSITIF ABRASIF, EN PARTICULIER DISPOSITIF À DISQUE ABRASIF OU DISPOSITIF À DISQUE D'APPUI

(30) Priorität: 12.04.2017 DE 102017206339; 18.10.2017 DE 102017218622
(43) Veröffentlichungstag der Anmeldung: 19.02.2020
(73) Patentinhaber: Robert Bosch GmbH, 70442 Stuttgart (DE)
(72) Erfinder: SINZIG, Bruno, 4538 Oberbipp (CH); CHRISTEN, Stefan, 3076 Worb (CH); LAETT, Michael, 4500 Solothurn (CH); QUEBATTE, Laurent, 3930 Visp (CH); WINISTOERFER, David, 4566 Kriegstetten (CH)
(86) Internationale Anmeldenummer: PCT/EP2018/056200
(87) Internationale Veröffentlichungsnummer: WO 2018/188870

(56) Entgegenhaltungen:
- WO-A1-01/96067
- WO-A1-2011/014914
- DE-A1- 102011 075 228

## Beschreibung

### Stand der Technik

Es sind bereits Schleifmittelvorrichtungen, insbesondere Schleiftellervorrichtungen oder Stütztellervorrichtungen, von zumindest einem Schleifmittel, insbesondere von zumindest einer Schleifscheibe, an einer tragbaren Werkzeugmaschine, insbesondere an einer Schleifmaschine, bekannt. Die bekannten Schleifmittelvorrichtungen umfassen zumindest eine mittels eines Gewindes an einer Abtriebseinheit der tragbaren Werkzeugmaschine fixierbare Aufnahmeeinheit, insbesondere Schleifteller oder Stützteller, an der zumindest ein Schleifmittel anordenbar ist, und zumindest eine, insbesondere getrennt von der Aufnahmeeinheit ausgebildete, Sicherungseinheit zumindest zu einer axialen Fixierung der Aufnahmeeinheit und/oder des Schleifmittels an der Abtriebseinheit der tragbaren Werkzeugmaschine. Bei den bekannten Schleifmittelvorrichtungen ist die Sicherungseinheit beispielsweise als Spindelmutter ausgebildet, die mittels eines Werkzeugs zu einer axialen Fixierung der Aufnahmeeinheit und/oder des Schleifmittels auf ein Gewinde einer Abtriebsspindel der Abtriebseinheit der tragbaren Werkzeugmaschine schraubbar ist.

### Offenbarung der Erfindung

Die Erfindung geht aus von einer Schleifmittelvorrichtung, insbesondere von einer Schleiftellervorrichtung oder von einer Stütztellervorrichtung, zu einer Anordnung von zumindest einem Schleifmittel, insbesondere von zumindest einer Schleifscheibe, an einer tragbaren Werkzeugmaschine, insbesondere einer Schleifmaschine, mit zumindest einer, insbesondere gewindefrei an einer Abtriebseinheit der tragbaren Werkzeugmaschine fixierbaren, Aufnahmeeinheit, insbesondere einem Schleifteller oder einem Stützteller, an der zumindest ein Schleifmittel anordenbar ist, und mit zumindest einer, insbesondere getrennt von der Aufnahmeeinheit ausgebildeten, Sicherungseinheit zumindest zu einer axialen Fixierung der Aufnahmeeinheit und/oder des Schleifmittels an der Abtriebseinheit der tragbaren Werkzeugmaschine.

Es wird vorgeschlagen, dass die Sicherungseinheit zumindest zu einer werkzeuglosen axialen Fixierung der Aufnahmeeinheit und/oder des Schleifmittels an der Abtriebseinheit der tragbaren Werkzeugmaschine und/oder zumindest zu einer werkzeuglosen axialen Fixierung des Schleifmittels an der Aufnahmeeinheit vorgesehen ist. Bevorzugt ist die Sicherungseinheit dazu vorgesehen, infolge einer Aufsteckbewegung und/oder einer Einschiebbewegung auf die und/oder in die Abtriebseinheit, insbesondere mit oder ohne anschließender Drehbewegung der Sicherungseinheit, zumindest die Aufnahmeeinheit und/oder das Schleifmittel mittels einer form- und/oder kraftschlüssigen Verbindung, insbesondere zumindest zwischen der Sicherungseinheit und einer beweglichen Hakenbacke einer Klemmeinrichtung einer Schnellspannvorrichtung der tragbaren Werkzeugmaschine, an der Abtriebseinheit axial zu fixieren. Die Schnellspannvorrichtung ist vorzugsweise an der Abtriebseinheit, insbesondere an oder zumindest teilweise in einer Spindel der Abtriebseinheit, angeordnet oder die Schnellspannvorrichtung ist ein Teil der Abtriebseinheit. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Bevorzugt ist die Sicherungseinheit dazu vorgesehen, infolge einer zumindest im Wesentlichen parallel zu einer Rotationsachse der Aufnahmeeinheit verlaufenden Bewegung, insbesondere einer Aufsteckbewegung und/oder einer Einschiebbewegung, der Sicherungseinheit an der Abtriebseinheit angeordnet zu werden, um die Aufnahmeeinheit und/oder das Schleifmittel an der Abtriebseinheit axial zu fixieren. Es ist jedoch auch denkbar, dass die Sicherungseinheit dazu vorgesehen ist, entlang einer an anderen, einem Fachmann als sinnvoll erscheinenden Richtung relativ zur Rotationsachse der Aufnahmeeinheit bewegt zu werden, um die Aufnahmeeinheit und/oder das Schleifmittel an der Abtriebseinheit axial zu fixieren, wie beispielsweise entlang einer Richtung quer, insbesondere zumindest im Wesentlichen senkrecht, zur Rotationsachse der Aufnahmeeinheit. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Ferner soll hier unter "zumindest im Wesentlichen senkrecht" insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die Schleifmittelvorrichtung ist vorzugsweise als Schleifmittelhaltevorrichtung zu einem Halten zumindest eines Schleifmittels ausgebildet, wie beispielsweise als Schleiftellervorrichtung oder als Stütztellervorrichtung. Die Aufnahmeeinheit der Schleifmittelvorrichtung ist vorzugsweise abnehmbar an der Abtriebseinheit, insbesondere an einer Spindel der Abtriebseinheit und/oder an einer an der Spindel angeordneten Schnellspannvorrichtung der Abtriebseinheit, anordenbar. Vorzugsweise ist die Aufnahmeeinheit nach einer Aufhebung einer Fixierung, insbesondere durch eine Abnahme der Sicherungseinheit von der Aufnahmeeinheit und/oder von der Abtriebseinheit, werkzeuglos von der Abtriebseinheit abnehmbar, insbesondere zumindest entkoppelt von einem Schraubprozess. Alternativ oder zusätzlich ist es denkbar, dass die Aufnahmeeinheit zumindest ein, insbesondere an einem Grundkörper der Aufnahmeeinheit angeordnetes, Sicherungselement aufweist, das dazu vorgesehen, ist ein ungewolltes Lösen der Aufnahmeeinheit von der Abtriebseinheit, insbesondere ein durch eine Schwerkraft bedingtes Herunterfallen der Aufnahmeeinheit nach einer Aufhebung einer Fixierung an der Abtriebseinheit, zu vermeiden. Das Sicherungselement der Aufnahmeeinheit kann als Kraftschlusselement und/oder als Formschlusselement, wie beispielsweise als ein an der Spindel anlegbares Gummielement, insbesondere O-Ring, als federelastisches Rastelement, als Sicherungsclip o. dgl. ausgebildet sein, das insbesondere zusätzlich zur Sicherungseinheit zu einem Aufbringen einer Haltekraft zu einem Halten der Aufnahmeeinheit an der Abtriebseinheit vorgesehen ist.

Die Sicherungseinheit ist vorzugsweise dazu vorgesehen, zumindest zu einer axialen Fixierung der Aufnahmeeinheit und/oder des Schleifmittels an der Abtriebseinheit der tragbaren Werkzeugmaschine mit einer Schnellspannvorrichtung der Abtriebseinheit zusammenzuwirken, insbesondere zumindest mit zumindest einer beweglich gelagerten Hakenbacke einer Klemmeinrichtung der Schnellspannvorrichtung der Abtriebseinheit der tragbaren Werkzeugmaschine. Bevorzugt sind die Aufnahmeeinheit und das Schleifmittel, insbesondere zusammen, mittels eines Zusammenwirkens der Sicherungseinheit mit der zumindest einen beweglich gelagerten Hakenbacke der Klemmeinrichtung der Schnellspannvorrichtung der Abtriebseinheit der tragbaren Werkzeugmaschine zumindest axial an der Abtriebseinheit, insbesondere an der Klemmeinrichtung, die an einer Spindel, insbesondere einer Hohlspindel, der Abtriebseinheit angeordnet ist, fixierbar. Es ist jedoch auch, insbesondere alternativ, denkbar, dass die Sicherungseinheit derart ausgebildet ist, dass die Sicherungseinheit zumindest ein werkzeuglos bedienbares Sicherungselement aufweist, das zu einer axialen Fixierung der Aufnahmeeinheit an der Abtriebseinheit aufweist und zusätzlich zumindest ein werkzeuglos bedienbares weiteres Sicherungselement, das zu einer axialen Fixierung des Schleifmittels an der Aufnahmeeinheit vorgesehen ist. Auch denkbar ist, insbesondere alternativ, dass die Aufnahmeeinheit ein Fixierungselement aufweist, das zu einer axialen Fixierung der Aufnahmeeinheit an der Abtriebseinheit form- und/oder kraftschlüssig mit der Klemmeinrichtung der Schnellspannvorrichtung der tragbaren Werkzeugmaschine zusammenwirkt und die Sicherungseinheit dazu vorgesehen ist, insbesondere lediglich, das Schleifmittel an der Aufnahmeeinheit axial zu fixieren.

Der Begriff "werkzeuglose Fixierung/werkzeuglose Bedienung" soll insbesondere eine Fixierung/Bedienung von zumindest einem Element und/oder von zumindest einer Einheit definieren, wobei die Fixierung/Bedienung insbesondere entkoppelt ist von einem zusätzlichen Betätigungswerkzeug, wie beispielsweise einem Schraubendreher, einem Schraubenschlüssel usw. Bevorzugt ist die Sicherungseinheit von einem Bediener zumindest zu einer axialen Fixierung der Aufnahmeeinheit und/oder des Schleifmittels an der Abtriebseinheit der tragbaren Werkzeugmaschine entkoppelt von einem zusätzlichen Betätigungswerkzeug, wie beispielsweise einem Schraubendreher, einem Schraubenschlüssel usw., von einer Fixierungsstellung in eine Lösestellung und umgekehrt überführbar. Vorzugsweise ist die Sicherungseinheit händisch von einem Bediener von einer Fixierungsstellung in eine Lösestellung und umgekehrt überführbar. Der Begriff "gewindefrei fixierbar" soll insbesondere eine Fixierung zumindest eines Elements und/oder zumindest einer Einheit an zumindest einem weiteren Element und/oder an zumindest einer weiteren Einheit definieren, die unabhängig von einem Ineinandergreifen von Gewindegängen von den aneinander befestigbaren Elementen und/oder Einheiten realisierbar ist. Vorzugsweise ist die Aufnahmeeinheit frei von einem Gewinde zu einer Fixierung der Aufnahmeeinheit an der Abtriebseinheit ausgebildet. Bevorzugt ist die Sicherungseinheit frei von einem Gewinde zu einer Fixierung der Aufnahmeeinheit und/oder des Schleifmittels an der Abtriebseinheit ausgebildet.

Die Aufnahmeeinheit umfasst vorzugsweise eine Schleifmittelanlagefläche, an der zumindest ein Schleifmittel anlegbar ist. Vorzugsweise ist zumindest ein an der Schleifmittelanlagefläche angeordnetes Schleifmittel mittels der Sicherungseinheit, insbesondere infolge eines Zusammenwirkens der Sicherungseinheit mit der Klemmeinrichtung, an der Schleifmittelanlagefläche fixierbar. Bevorzugt ist zumindest ein an der Schleifmittelanlagefläche mittels der Sicherungseinheit fixiertes Schleifmittel, insbesondere entlang einer zumindest im Wesentlichen parallel zur Rotationsachse der Aufnahmeeinheit verlaufenden Richtung, zwischen der Aufnahmeeinheit und der Sicherungseinheit angeordnet, insbesondere geklemmt. Vorzugsweise umfasst die Sicherungseinheit zumindest eine Spannfläche, mittels der zumindest ein an der Aufnahmeeinheit, insbesondere an der Schleifmittelanlagefläche der Aufnahmeeinheit, angeordnetes Schleifmittel an die Schleifmittelanlagefläche der Aufnahmeeinheit andrückbar ist.

Mittels der erfindungsgemäßen Ausgestaltung kann vorteilhaft eine einfach und komfortabel zu bedienende Schleifmittelvorrichtung zu einer Anordnung zumindest eines Schleifmittels an einer Abtriebseinheit einer tragbaren Werkzeugmaschine realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Des Weiteren wird vorgeschlagen, dass die Sicherungseinheit zumindest ein Axialsicherungselement umfasst, das zu einer werkzeuglosen axialen Fixierung der Aufnahmeeinheit und/oder des Schleifmittels zumindest teilweise in die Aufnahmeeinheit, insbesondere in eine Aufnahmeausnehmung der Aufnahmeeinheit eingreift. Die Aufnahmeausnehmung der Aufnahmeeinheit ist vorzugsweise zu einer zumindest teilweisen Aufnahme der Abtriebseinheit, insbesondere der Klemmeinrichtung, und/oder der Sicherungseinheit vorgesehen. Bevorzugt ist die Sicherungseinheit, insbesondere in einem an der Aufnahmeeinheit angeordneten Zustand der Sicherungseinheit, zumindest zu einem Großteil innerhalb der Aufnahmeeinheit, insbesondere der Aufnahmeausnehmung, anordenbar. Unter einem "Großteil" soll insbesondere zumindest mehr als 50 %, bevorzugt zumindest mehr als 75 % und besonders bevorzugt zumindest mehr als 90 % eines Bezugswerts, insbesondere eines Gesamtvolumens, verstanden werden. Vorzugsweise ist die Abtriebseinheit, insbesondere die Klemmeinrichtung, in einem an der Abtriebseinheit angeordneten Zustand der Aufnahmeeinheit zumindest teilweise in der Aufnahmeausnehmung angeordnet. Insbesondere ist das Axialsicherungselement dazu vorgesehen, in einem an der Abtriebseinheit angeordneten Zustand der Aufnahmeeinheit und der Sicherungseinheit zumindest teilweise innerhalb der Aufnahmeausnehmung der Aufnahmeeinheit formschlüssig mit der Klemmeinrichtung zusammenzuwirken. Bevorzugt ist das Axialsicherungselement als Fortsatz ausgebildet, der zumindest einen sich quer, insbesondere zumindest im Wesentlichen senkrecht, zu einer Mittelachse, insbesondere einer Rotationsachse, der Sicherungseinheit erstreckenden Teilbereich, insbesondere Rastbereich, aufweist. Bevorzugt ist der sich quer, insbesondere zumindest im Wesentlichen senkrecht, zur Mittelachse, insbesondere zur Rotationsachse, der Sicherungseinheit erstreckende Teilbereich dazu vorgesehen, formschlüssig mit der Klemmeinrichtung, insbesondere der zumindest einen Hakenbacke, zusammenzuwirken. Bevorzugt ist der zumindest sich quer, insbesondere zumindest im Wesentlichen senkrecht, zur Mittelachse, insbesondere zur Rotationsachse, der Sicherungseinheit erstreckende Teilbereich dazu vorgesehen, formschlüssig in die Klemmeinrichtung, insbesondere in die zumindest eine Hakenbacke, einzugreifen. Mittels der erfindungsgemäßen Ausgestaltung kann vorteilhaft eine sichere axiale Fixierung der Aufnahmeeinheit mittels der Sicherungseinheit realisiert werden. Es kann vorteilhaft ein sicherer Schutz der Sicherungseinheit, insbesondere des zumindest einen Axialsicherungselements, in zumindest einem an der Aufnahmeeinheit angeordneten Zustand der Sicherungseinheit realisiert werden. Es kann vorteilhaft eine einfach und komfortabel zu bedienende Schleifmittelvorrichtung zu einer Anordnung zumindest eines Schleifmittels an einer Abtriebseinheit einer tragbaren Werkzeugmaschine realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Ferner wird vorgeschlagen, dass die Sicherungseinheit zumindest ein Axialsicherungselement umfasst, das federelastisch auslenkbar ausgebildet ist. Das Axialsicherungselement kann einteilig mit einem Grundkörper der Sicherungseinheit ausgebildet sein oder separat zu dem Grundkörper ausgebildet sein und insbesondere mittels einer, einem Fachmann als sinnvoll erscheinenden Verbindung, insbesondere einer form- und/oder kraftschlüssigen Verbindung, an dem Grundkörper fixiert sein. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das Axialsicherungselement ist vorzugsweise aus einem Metall oder aus einer metallischen Legierung gebildet, wie beispielsweise Federstahl o. dgl. Es ist jedoch auch denkbar, dass das Axialsicherungselement aus einem anderen, einem Fachmann als sinnvoll erscheinenden Werkstoff gebildet wird, wie beispielsweise aus einem Kunststoff o. dgl. Es ist jedoch auch, insbesondere alternativ, denkbar, dass die Sicherungseinheit zumindest ein am Grundkörper beweglich gelagertes Axialsicherungselement und zumindest ein Federelement aufweist, das das Axialsicherungselement mit einer Federkraft beaufschlagt. Mittels der erfindungsgemäßen Ausgestaltung kann vorteilhaft eine sichere Fixierung der Aufnahmeeinheit und/oder der Sicherungseinheit an der Abtriebseinheit ermöglicht werden. Es kann vorteilhaft infolge einer elastischen Auslenkmöglichkeit des Axialsicherungselements eine vorteilhafte Rastfunktion realisiert werden. Es kann vorteilhaft sichergestellt werden, dass das Axialsicherungselement zuverlässig an die Klemmvorrichtung angedrückt wird. Es kann vorteilhaft eine ungewollte Lösung einer form- und/oder kraftschlüssigen Verbindung zwischen dem Axialsicherungselement und der Klemmvorrichtung entgegengewirkt werden, da infolge einer elastischen Auslenkmöglichkeit des Axialsicherungselements eine vorteilhafte Haltekraft realisierbar ist. Es kann vorteilhaft eine einfach und komfortabel zu bedienende Schleifmittelvorrichtung zu einer Anordnung zumindest eines Schleifmittels an einer Abtriebseinheit einer tragbaren Werkzeugmaschine realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Erfindungsgemäß wird vorgeschlagen, dass die Sicherungseinheit zumindest ein Axialsicherungselement umfasst, das beweglich an einem Grundkörper der Sicherungseinheit gelagert ist. Der Ausdruck "beweglich gelagert" soll hier insbesondere eine Lagerung einer Einheit und/oder eines Elements definieren, wobei die Einheit und/oder das Element, insbesondere entkoppelt von einer elastischen Verformung der Einheit und/oder des Elements, eine Bewegungsmöglichkeit entlang zumindest einer Strecke größer als 0,1 mm, bevorzugt größer als 0,5 mm und besonders bevorzugt größer als 1 mm aufweist und/oder eine Bewegungsmöglichkeit um zumindest eine Achse um einen Winkel größer als 2,5°, bevorzugt größer als 5° und besonders bevorzugt größer als 10° aufweist. Das zumindest eine Axialsicherungselement kann translatorisch und/oder rotatorisch beweglich am Grundkörper der Sicherungseinheit gelagert sein. Eine Bewegungsachse des zumindest einen Axialsicherungselements verläuft erfindungsgemäß zumindest im Wesentlichen parallel, insbesondere koaxial zur Mittelachse, insbesondere einer Rotationsachse, der Sicherungseinheit.

Es ist auch denkbar, dass die Sicherungseinheit eine von eins abweichende Anzahl an Axialsicherungselementen aufweist, die beweglich, insbesondere translatorisch und/oder rotatorisch beweglich, an dem Grundkörper der Sicherungseinheit gelagert sind. Mittels der erfindungsgemäßen Ausgestaltung kann vorteilhaft eine sichere axiale Fixierung der Aufnahmeeinheit mittels der Sicherungseinheit realisiert werden. Es kann vorteilhaft eine zuverlässige Fixierung der Aufnahmeeinheit mittels der Sicherungseinheit infolge einer Möglichkeit eines Spiel- und/oder Einsatzwerkzeugdickenausgleichs durch die bewegliche Lagerung des zumindest einen Axialsicherungselements an dem Grundkörper der Sicherungseinheit realisiert werden.

Des Weiteren wird vorgeschlagen, dass der Grundkörper der Sicherungseinheit zumindest ein Bewegungsführungselement, insbesondere eine Führungsnut, aufweist, das dazu vorgesehen ist, das zumindest eine Axialsicherungselement bei einer Bewegung relativ zum Grundkörper der Sicherungseinheit zu führen. Bevorzugt ist das Bewegungsführungselement als Führungsnut ausgebildet. Vorzugsweise wird das als Führungsnut ausgebildete Bewegungsführungselement zumindest teilweise von zumindest einem, insbesondere am Grundkörper angeordneten, Formschlusselement begrenzt, das zu einer Übertragung von einer Antriebskraft und/oder eines Antriebsdrehmoments auf das Schleifmittel vorgesehen ist. Bevorzugt wird das als Führungsnut ausgebildete Bewegungsführungselement zumindest teilweise von dem zumindest einen, insbesondere am Grundkörper angeordneten, Formschlusselement und zumindest einem, insbesondere am Grundkörper angeordneten, Einführfortsatz der Sicherungseinheit begrenzt. Es ist jedoch auch denkbar, dass das Bewegungsführungselement zu einer Führung des zumindest einen Axialsicherungselements eine andere, einem Fachmann als sinnvoll erscheinende Ausgestaltung aufweist, wie beispielsweise eine Ausgestaltung als Führungsfortsatz o. dgl. Es ist auch denkbar, dass das Bewegungsführungselement und/oder das Axialsicherungselements mit zumindest einem Reibungsminderungselement, wie beispielsweise mit einer Gleitschicht o. dgl., versehen sind/ist, das zu einer Minimierung einer Reibung zwischen dem Bewegungsführungselement und dem Axialsicherungselement vorgesehen ist. Mittels der erfindungsgemäßen Ausgestaltung kann vorteilhaft eine zuverlässige Führung des Axialsicherungselements während einer Bewegung des Axialsicherungselements relativ zum Grundkörper realisiert werden. Es kann vorteilhaft eine sichere axiale Fixierung der Aufnahmeeinheit mittels der Sicherungseinheit realisiert werden. Es kann vorteilhaft eine zuverlässige Fixierung der Aufnahmeeinheit mittels der Sicherungseinheit infolge einer Möglichkeit eines Spiel- und/oder Einsatzwerkzeugdickenausgleichs durch die bewegliche Lagerung des zumindest einen Axialsicherungselements an dem Grundkörper der Sicherungseinheit realisiert werden.

Ferner wird vorgeschlagen, dass der Grundkörper der Sicherungseinheit zumindest ein Bewegungsbegrenzungselement aufweist, das dazu vorgesehen ist, eine maximale Bewegungsstrecke des zumindest einen Axialsicherungselements relativ zum Grundkörper der Sicherungseinheit zu begrenzen. Bevorzugt ist das zumindest eine Bewegungsbegrenzungselement als Fortsatz ausgebildet. Es ist jedoch auch denkbar, dass das zumindest eine Bewegungsbegrenzungselement eine andere, einem Fachmann als sinnvoll erscheinende Ausgestaltung aufweist, wie beispielsweise eine Ausgestaltung als Bodenplattenelement des Grundkörpers der Sicherungseinheit o. dgl. Vorzugsweise erstreckt sich das zumindest eine Bewegungsbegrenzungselement quer, insbesondere zumindest im Wesentlichen senkrecht, zur Mittelachse, insbesondere einer Rotationsachse, der Sicherungseinheit. Vorzugsweise umfasst der Grundkörper der Sicherungseinheit zumindest zwei Bewegungsbegrenzungselemente, die zusammen dazu vorgesehen sind, eine maximale Bewegungsstrecke des zumindest einen Axialsicherungselement relativ zum Grundkörper der Sicherungseinheit zu begrenzen. Mittels der erfindungsgemäßen Ausgestaltung kann vorteilhaft eine verliersichere Anordnung des Axialsicherungselements am Grundkörper realisiert werden. Es kann vorteilhaft eine sichere axiale Fixierung der Aufnahmeeinheit mittels der Sicherungseinheit realisiert werden. Es kann vorteilhaft eine zuverlässige Fixierung der Aufnahmeeinheit mittels der Sicherungseinheit infolge einer Möglichkeit eines Spiel- und/oder Einsatzwerkzeugdickenausgleichs durch die bewegliche Lagerung des zumindest einen Axialsicherungselements an dem Grundkörper der Sicherungseinheit realisiert werden.

Zudem wird vorgeschlagen, dass die Aufnahmeeinheit in einem Nahberiech einer Aufnahmeausnehmung, in die die Sicherungseinheit zumindest teilweise eingreift, zumindest ein Drehmomentübertragungselement aufweist, das zumindest, mit einem Drehmomentübertragungsfortsatz der tragbaren Werkzeugmaschine zusammenzuwirken. Vorzugsweise ist das Drehmomentübertragungselement und der Drehmomentübertragungsfortsatz infolge einer Aufschiebe- und/oder eine Aufsetzbewegung der Aufnahmeeinheit auf die Schnellspannvorrichtung miteinander in Verbindung bringbar. Der Drehmomentübertragungsfortsatz der tragbaren Werkzeugmaschine ist vorzugsweise als Mitnahmebacke einer Mitnahmeeinrichtung der Schnellspannvorrichtung ausgebildet. Mittels der erfindungsgemäßen Ausgestaltung kann vorteilhaft eine konstruktiv einfache Übertragung eines Drehmoments zu einem rotierenden Antrieb der Aufnahmeeinheit realisiert werden. Es kann vorteilhaft eine einfach und komfortabel zu bedienende Schleifmittelvorrichtung zu einer Anordnung zumindest eines Schleifmittels an einer Abtriebseinheit einer tragbaren Werkzeugmaschine realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Des Weiteren wird vorgeschlagen, dass die Aufnahmeeinheit zumindest ein Drehmomentübertragungselement aufweist, das zumindest eine Anlagefläche aufweist, die zumindest im Wesentlichen parallel zu einer Radialrichtung der Aufnahmeeinheit verläuft. Das Drehmomentübertragungselement umfasst vorzugsweise eine Anlagefläche, die in einem an der Abtriebseinheit der tragbaren Werkzeugmaschine angeordneten Zustand der Aufnahmeeinheit dazu vorgesehen ist, an dem Drehmomentübertragungsfortsatz anzuliegen. Die Anlagefläche des Drehmomentübertragungselements verläuft vorzugsweise zumindest im Wesentlichen parallel zu einer, insbesondere durch die Rotationsachse der Aufnahmeeinheit verlaufenden, Radialrichtung der Aufnahmeeinheit. Vorzugsweise ist die Anlagefläche des Drehmomentübertragungselements relativ zu der, insbesondere durch die Rotationsachse der Aufnahmeeinheit verlaufenden, Radialrichtung der Aufnahmeeinheit versetzt angeordnet. Vorzugsweise weist die Anlagefläche des Drehmomentübertragungselements einen, insbesondere senkrecht zur Anlagefläche verlaufenden, maximalen Abstand zu der, insbesondere durch die Rotationsachse der Aufnahmeeinheit verlaufende, Radialrichtung der Aufnahmeeinheit auf, der insbesondere kleiner ist als 10 mm, bevorzugt kleiner ist als 8 mm, besonders bevorzugt kleiner ist als 7 mm und ganz besonders bevorzugt größer ist als 5 mm. Mittels der erfindungsgemäßen Ausgestaltung kann vorteilhaft eine zuverlässige Übertragung eines Drehmoments zu einem rotierenden Antrieb der Aufnahmeeinheit realisiert werden. Es kann vorteilhaft eine konstruktiv einfache Übertragung eines Drehmoments zu einem rotierenden Antrieb der Aufnahmeeinheit realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Ferner wird vorgeschlagen, dass die Aufnahmeeinheit zumindest eine Aufnahmeausnehmung aufweist, in die die Sicherungseinheit zumindest teilweise eingreift, wobei zumindest ein die Aufnahmeausnehmung zumindest teilweise begrenzender Randbereich der Aufnahmeeinheit zumindest eine Kontaktfläche zu einer Übertragung einer Antriebskraft und/oder eines Antriebsdrehmoments auf die Sicherungseinheit bildet. Die Kontaktfläche ist vorzugsweise relativ zur Anlagefläche des Drehmomentübertragungselements versetzt angeordnet, insbesondere entlang einer zumindest im Wesentlichen parallel zur Rotationsachse der Aufnahmeeinheit verlaufenden Richtung. Die Kontaktfläche verläuft vorzugsweise quer zur Anlagefläche des Drehmomentübertragungselements. Insbesondere sind die Kontaktfläche und die Anlagefläche relativ zueinander geneigt angeordnet, insbesondere um einen Winkel von weniger als 40°, bevorzugt von weniger als 30° und besonders bevorzugt von weniger als 26°, insbesondere entlang einer um die Rotationsachse der Aufnahmeeinheit verlaufende Umfangsrichtung der Aufnahmeeinheit. Bevorzugt verläuft die Kontaktfläche zumindest im Wesentlichen parallel zu einer, insbesondere durch die Rotationsachse der Aufnahmeeinheit verlaufenden, Radialrichtung der Aufnahmeeinheit. Vorzugsweise weist die Kontaktfläche zu der, insbesondere durch die Rotationsachse der Aufnahmeeinheit verlaufenden, Radialrichtung der Aufnahmeeinheit einen, insbesondere senkrecht zur Kontaktfläche verlaufenden, maximalen Abstand auf, der insbesondere kleiner ist als 8 mm, bevorzugt kleiner ist als 6 mm, besondere bevorzugt kleiner ist als 5 mm und ganz besonders bevorzugt größer ist als 4 mm. Mittels der erfindungsgemäßen Ausgestaltung kann vorteilhaft eine zuverlässige Übertragung eines Drehmoments von der Aufnahmeeinheit auf die Sicherungseinheit realisiert werden. Es kann konstruktiv einfach eine Drehmitnahme der Sicherungseinheit realisiert werden, insbesondere eine drehfeste Verbindung zwischen der Aufnahmeeinheit und der Sicherungseinheit. Es kann vorteilhaft eine konstruktiv einfache Übertragung eines Drehmoments zu einem rotierenden Antrieb der Aufnahmeeinheit zusammen mit der Sicherungseinheit realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Zudem wird vorgeschlagen, dass die Aufnahmeeinheit zumindest eine Positionierausnehmung zu einer Positionierung der Sicherungseinheit aufweist, wobei die Positionierausnehmung angrenzend an eine Aufnahmeausnehmung der Aufnahmeeinheit angeordnet ist, die zumindest teilweise von zumindest einem Randbereich der Aufnahmeeinheit begrenzt ist, der zu einer Übertragung von einer Antriebskraft und/oder eines Antriebsdrehmoments auf die Sicherungseinheit vorgesehen ist. Die Positionierausnehmung weist vorzugsweise eine zu einem Verlauf eines Gesamtaußenumfangs, insbesondere eines in zumindest einer sich zumindest im Wesentlichen senkrecht zur Mittelachse, insbesondere zur Rotationsachse, der Sicherungseinheit erstreckenden Ebene verlaufenden Gesamtaußenumfangs, der Sicherungseinheit korrespondierend ausgebildete Form auf. Vorzugsweise ist die Positionierausnehmung rund, insbesondere kreisrund, ausgebildet. Es ist jedoch auch denkbar, dass die Positionierausnehmung eine andere, einem Fachmann als sinnvoll erscheinende Ausgestaltung aufweist, insbesondere in Abhängigkeit von einer Ausgestaltung eines Verlaufs eines Gesamtaußenumfangs der Sicherungseinheit, wie beispielsweise eine polygonale Ausgestaltung mit oder ohne Verzahnung o. dgl. Bevorzugt weist die Positionierausnehmung einen maximale Quererstreckung, insbesondere einen Durchmesser, auf, der insbesondere kleiner ist als 50 mm, bevorzugt kleiner ist als 45 mm, besonders bevorzugt kleiner ist als 36 mm und ganz besondere bevorzugt größer ist als 34 mm. Vorzugsweise weist die Positionierausnehmung eine maximale Tiefe von insbesondere weniger als 10 mm, bevorzugt von weniger als 8 mm, besonders bevorzugt von weniger als 6 mm und ganz besonders bevorzugt von mehr als 1 mm auf. Vorzugsweise ist die Sicherungseinheit in einem an der Aufnahmeeinheit angeordneten Zustand zumindest teilweise innerhalb der Positionierausnehmung angeordnet. Bevorzugt weist die Aufnahmeeinheit in einem Übergangsbereich zwischen der Positionierausnehmung, insbesondere einer die Positionierausnehmung in Richtung der Rotationsachse begrenzenden Verbindungsfläche der Aufnahmeeinheit zu einem Kontakt mit der Sicherungseinheit, und der Kontaktfläche eine Einführschräge auf. Die Einführschräge ist vorzugsweise zur Verbindungsfläche der Aufnahmeeinheit und/oder zur Kontaktfläche abgewinkelt. Vorzugsweise schließt die Einführschräge mit der Verbindungsfläche der Aufnahmeeinheit einen Winkel ein, der einem Wert aus einem Wertebereich von 30° bis 60°, insbesondere einem Wert von 45°, entspricht. Mittels der erfindungsgemäßen Ausgestaltung kann vorteilhaft eine weitestgehend spielfreie Verbindung zwischen der Aufnahmeeinheit und der Sicherungseinheit realisiert werden. Es kann vorteilhaft ein präzises Anliegen der Sicherungseinheit an der Aufnahmeeinheit realisiert werden. Es kann vorteilhaft sichergestellt werden, dass die Sicherungseinheit bei einer Verbindung mit der Aufnahmeeinheit präzise an die Aufnahmeeinheit anlegbar ist, insbesondere um einen sicheren Kontakt zwischen der Klemmeinrichtung und der Sicherungseinheit zu einer zuverlässigen axialen Fixierung der Aufnahmeeinheit und/oder des Schleifmittels an der Abtriebseinheit zu gewährleisten. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist. Es kann vorteilhaft ein schneller Wechsel von zumindest einem an der Aufnahmeeinheit angeordneten Schleifmittel realisiert werden.

Des Weiteren wird vorgeschlagen, dass die Sicherungseinheit zumindest ein Formschlusselement zu einer Übertragung von einer Antriebskraft und/oder eines Antriebsdrehmoments auf das Schleifmittel aufweist. Das Formschlusselement ist vorzugsweise als Fortsatz ausgebildet. Das Formschlusselement ist vorzugsweise am Grundkörper der Sicherungseinheit angeordnet. Das Formschlusselement ist vorzugsweise dazu vorgesehen, in eine korrespondierend ausgebildete Formschlussausnehmung des Schleifmittels einzugreifen, insbesondere in einem mittels der Sicherungseinheit an der Aufnahmeeinheit und/oder der Abtriebseinheit axial fixierten Zustand des Schleifmittels. Mittels der erfindungsgemäßen Ausgestaltung kann vorteilhaft eine sichere und zuverlässige Übertragung eines Drehmoments auf das Schleifmittel zu einem rotierenden Antrieb des Schleifmittels zusammen mit der Aufnahmeeinheit und/oder der Sicherungseinheit realisiert werden. Es kann vorteilhaft eine Relativbewegung zwischen der Sicherungseinheit und dem Schleifmittel entgegengewirkt werden.

Ferner wird vorgeschlagen, dass das Formschlusselement an einer Spannfläche der Sicherungseinheit angeordnet ist, die zu einer axialen Fixierung des Schleifmittels an der Aufnahmeeinheit und/oder an der Abtriebseinheit an dem Schleifmittel anlegbar ist. Die Spannfläche ist in einem an der Aufnahmeeinheit und/oder an der Abtriebseinheit angeordneten Zustand der Sicherungseinheit an einer der Aufnahmeeinheit zugewandten Seite der Sicherungseinheit angeordnet. Vorzugsweise ist die Spannfläche, insbesondere direkt, angrenzend an das Formschlusselement am Grundkörper der Sicherungseinheit angeordnet. Bevorzugt sind die Spannfläche und das zumindest eine Formschlusselement stoffschlüssig miteinander verbunden, insbesondere einteilig ausgebildet. Vorzugsweise ist die Spannfläche relativ zur Mittelachse, insbesondere zur Rotationsachse, der Sicherungseinheit geneigt. Die Spannfläche schließt bevorzugt mit einer sich zumindest im Wesentlichen senkrecht zur Mittelachse, insbesondere zur Rotationsachse, der Sicherungseinheit erstreckenden Ebene einen Winkel ein, der einem Wert aus einem Winkelbereich zwischen 10° und 35° entspricht, insbesondere einem Wert aus einem Winkelbereich zwischen 15° und 25° entspricht. Mittels der erfindungsgemäßen Ausgestaltung kann vorteilhaft eine zuverlässige Fixierung zumindest eines Schleifmittels an der Aufnahmeeinheit und/oder an der Abtriebseinheit realisiert werden. Es kann vorteilhaft eine Einwirkung einer axialen Spannkraft zu einer Fixierung des Schleifmittels an der Aufnahmeeinheit mittels einer form- und/oder kraftschlüssigen Verbindung realisiert werden.

Zudem wird ein Schleifmittel, insbesondere eine Schleifscheibe vorgeschlagen, die mittels einer erfindungsgemäßen Schleifmittelvorrichtung an einer tragbaren Werkzeugmaschine, insbesondere einer Schleifmaschine, fixierbar ist. Das Schleifmittel ist vorzugsweise als Schleifscheibe, insbesondere als Fiberscheibe, ausgebildet. Das Schleifmittel ist vorzugsweise zumindest teilweise abrasiv ausgebildet. Bevorzugt weist das Schleifmittel eine Schleifschicht auf, die zumindest teilweise abrasiv ausgebildet ist. Das Schleifmittel, insbesondere die Schleifschicht, kann beispielsweise Quarz, Korund, Schmirgel, Bims, Granat, Naturdiamanten, synthetischen Korund (Al2O3), Siliziumkarbid (SiC), kubisches Bornitrid (cBN), synthetisch hergestellten Diamant o. dgl. aufweisen. Es ist jedoch auch denkbar, dass das Schleifmittel einen anderen, einem Fachmann als sinnvoll erscheinenden Werkstoff umfasst, der zu einer Ermöglichung eines Werkstückabtrags, insbesondere eines Schleifvorgangs, nutzbar ist. Vorzugsweis liegt die Schleifschicht in einem mittels der Sicherungseinheit an der Aufnahmeeinheit und/oder an der Abtriebseinheit fixierten Zustand des Schleifmittels an der Spannfläche der Sicherungseinheit an. Eine der Schleifschicht abgewandte Seite des Schleifmittels liegt in einem mittels der Sicherungseinheit an der Aufnahmeeinheit und/oder an der Abtriebseinheit fixierten Zustand des Schleifmittels an der Schleifmittelanlagefläche der Aufnahmeeinheit an. Mittels der erfindungsgemäßen Ausgestaltung des Schleifmittels kann vorteilhaft ein schneller Wechsel von zumindest einem an der Aufnahmeeinheit angeordneten Schleifmittel realisiert werden. Es kann vorteilhaft ein hoher Bedienkomfort erreicht werden, insbesondere da eine Fixierung zumindest eines Schleifmittels an der Aufnahmeeinheit und/oder an der Abtriebseinheit entkoppelt von einem zusätzlichen Betätigungswerkzeug realisierbar ist.

Des Weiteren wird vorgeschlagen, dass das Schleifmittel zumindest eine Kopplungseinheit zu einer Verbindung mit der Sicherungseinheit der Schleifmittelvorrichtung umfasst, wobei die Kopplungseinheit zumindest zwei unterschiedlich ausgestaltete Verbindungselemente, insbesondere Verbindungsausnehmungen, aufweist. Vorzugsweise weisen die Verbindungselemente jeweils eine Haupterstreckungsachse auf, die jeweils zumindest im Wesentlichen senkrecht zu einer Schleifmittelrotationsachse des Schleifmittels verläuft sind. Vorzugsweise sind die unterschiedlich ausgestalteten Verbindungselemente entlang einer Umfangsrichtung des Schleifmittels abwechselnd angeordnet. Es ist jedoch auch denkbar, dass die unterschiedlich ausgestalteten Verbindungselemente entlang der Umfangsrichtung des Schleifmittels auf eine andere, einem Fachmann als sinnvoll erscheinende Art und Weise am Schleifmittel angeordnet. Vorzugsweise sind die unterschiedlich ausgestalteten Verbindungselemente gemäß einer n-zähligen Symmetrie am Schleifmittel angeordnet. Mittels der erfindungsgemäßen Ausgestaltung des Schleifmittels kann eine besonders vorteilhafte Funktionsanpassung der Verbindungselemente an verschiedene Funktionen realisiert werden. Es kann vorteilhaft ein schneller Wechsel von zumindest einem an der Aufnahmeeinheit angeordneten Schleifmittel realisiert werden.

Ferner wird vorgeschlagen, dass die zumindest zwei unterschiedlich ausgestalteten Verbindungselemente zumindest unterschiedliche maximale Breitenerstreckungen aufweisen. Die Breitenerstreckung jedes einzelnen Verbindungselements verläuft vorzugsweise zumindest im Wesentlichen senkrecht zur Haupterstreckungsachse des jeweiligen Verbindungselements. Es kann vorteilhaft eines der Verbindungselemente zu einer Aufnahme des Formschlusselements der Sicherungseinheit vorgesehen sein, wobei ein weiteres der Verbindungselemente zu einer Positionierung der Sicherungseinheit an dem Schleifmittel vorgesehen ist. Es kann vorteilhaft eine Abwärtskompatibilität des erfindungsgemäßen Schleifmittels ermöglicht werden, insbesondere um eine Anordnung des erfindungsgemäßen Schleifmittels an bereits bekannten Schleifmittelvorrichtungen zu ermöglichen.

Zudem wird ein Einsatzwerkzeug mit einer erfindungsgemäßen Schleifmittelvorrichtung und mit einem an der erfindungsgemäßen Schleifmittelvorrichtung anordenbaren erfindungsgemäßen Schleifmittel vorgeschlagen. Das Einsatzwerkzeug ist vorzugsweise abnehmbar an einer Abtriebseinheit einer tragbaren Werkzeugmaschine anordenbar, insbesondere fixierbar. Mittels der erfindungsgemäßen Ausgestaltung kann vorteilhaft ein einfach zu handhabendes Einsatzwerkzeug realisiert werden.

Des Weiteren wird ein Werkzeugmaschinensystem mit zumindest einer tragbaren Werkzeugmaschine, insbesondere einer Schleifmaschine, und mit zumindest einem erfindungsgemäßen Einsatzwerkzeug, das mittels einer Schnellspannvorrichtung der tragbaren Werkzeugmaschine an einer Abtriebseinheit der tragbaren Werkzeugmaschine fixierbar ist, vorgeschlagen. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Besonders bevorzugt ist die tragbare Werkzeugmaschine als Winkelschleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Bohrmaschine, als Multifunktionsmaschine mit einer oszillierend antreibbaren Spindel o. dgl. Mittels der erfindungsgemäßen Ausgestaltung kann vorteilhaft ein Werkzeugmaschinensystem zur Verfügung gestellt werden, das einen besonders hohen Bedienkomfort ermöglicht.

Die erfindungsgemäße Schleifmittelvorrichtung, das erfindungsgemäße Einsatzwerkzeug und/oder das erfindungsgemäße Werkzeugmaschinensystem sollen/soll hierbei nicht auf die oben beschriebene Anwendung und Ausführungsform beschränkt sein. Insbesondere können/kann die erfindungsgemäße Schleifmittelvorrichtung, das erfindungsgemäße Einsatzwerkzeug und/oder das erfindungsgemäße Werkzeugmaschinensystem zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Werkzeugmaschinensystem mit zumindest einer tragbaren Werkzeugmaschine, insbesondere einer Winkelschleifmaschine, und mit einem an einer Abtriebseinheit der tragbaren Werkzeugmaschine angeordneten Einsatzwerkzeug in einer schematischen Darstellung,
- Fig. 2: eine Schnittansicht einer an der Abtriebseinheit angeordneten Schnellspannvorrichtung der tragbaren Werkzeugmaschine in einem Lösezustand in einer schematischen Darstellung,
- Fig. 3: eine Detailansicht einer Klemmeinrichtung und einer Mitnahmeeinrichtung der Schnellspannvorrichtung der tragbaren Werkzeugmaschine in einer schematischen Darstellung,
- Fig. 4a: eine Draufsicht auf eine Aufnahmeeinheit einer nicht erfindungsgemäßen Schleifmittelvorrichtung des Einsatzwerkzeugs in einer schematischen Darstellung,
- Fig. 4b: eine Schnittansicht der Aufnahmeeinheit der nicht erfindungsgemäßen Schleifmittelvorrichtung in einer schematischen Darstellung,
- Fig. 4c: eine weitere Draufsicht auf die Aufnahmeeinheit der nicht erfindungsgemäßen Schleifmittelvorrichtung des Einsatzwerkzeugs in einer schematischen Darstellung,
- Fig. 5: eine vergrößerte Ansicht einer Sicherungseinheit der nicht erfindungsgemäßen Schleifmittelvorrichtung in einer schematischen Darstellung,
- Fig. 6: eine Schnittansicht der Aufnahmeeinheit und der Sicherungseinheit in einem aneinander angeordneten Zustand der Aufnahmeeinheit und der Sicherungseinheit in einer schematischen Darstellung,
- Fig. 7: eine Detailansicht eines Schleifmittels, insbesondere einer Fiberscheibe, eines Einsatzwerkzeugs in einer schematischen Darstellung,
- Fig. 8: eine Schnittansicht einer erfindungsgemäßen Schleifmittelvorrichtung in einem an einer Schnellspannvorrichtung einer tragbaren Werkzeugmaschine angeordneten Zustand in einer schematischen Darstellung und
- Fig. 9: eine Schnittansicht einer Sicherungseinheit der erfindungsgemäßen Schleifmittelvorrichtung aus Figur 8 in einer schematischen Darstellung.

### Beschreibung der Ausführungsbeispiele

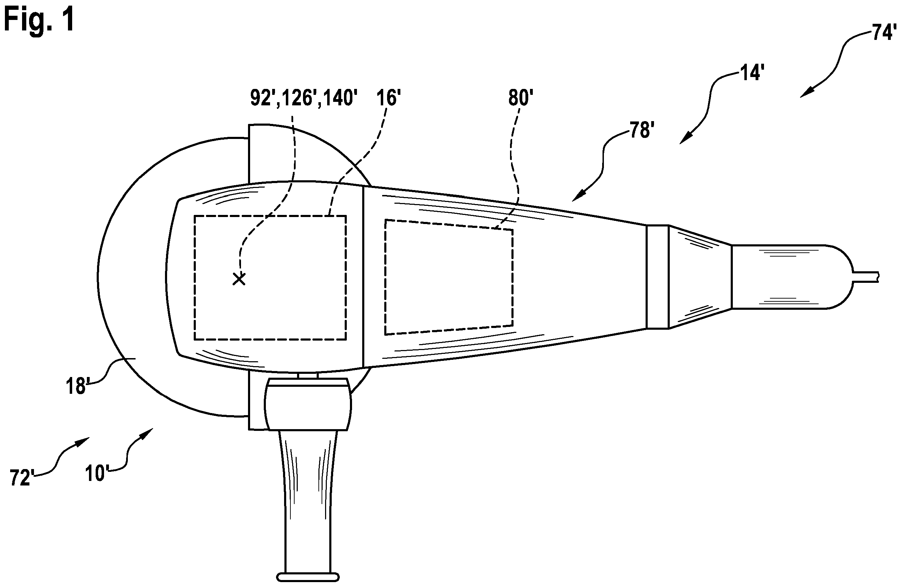

Figur 1 zeigt ein Werkzeugmaschinensystem 74' mit zumindest einer tragbaren Werkzeugmaschine 14', insbesondere einer Schleifmaschine, und mit zumindest einem an einer Abtriebseinheit 16' der tragbaren Werkzeugmaschine 14' angeordneten Einsatzwerkzeug 72'. Die tragbare Werkzeugmaschine 14' ist bevorzugt als Winkelschleifmaschine ausgebildet. Die tragbare Werkzeugmaschine 14' weist vorzugsweise eine Gehäuseeinheit 78' zu einer Aufnahme und/oder eine Lagerung einer Antriebseinheit 80', insbesondere einer Elektromotoreinheit, und der Abtriebseinheit 16' der tragbaren Werkzeugmaschine 14' auf eine, einem Fachmann bereits bekannte Art und Weise auf. Die Antriebseinheit 80' ist dazu vorgesehen, das Einsatzwerkzeug 72' in einem an der Abtriebseinheit 16' angeordneten Zustand über die Abtriebseinheit 16' auf eine, einem Fachmann bereits bekannte Art und Weise, insbesondere rotierend, anzutreiben. Das Einsatzwerkzeug 72' ist mittels einer Schnellspannvorrichtung 76' der tragbaren Werkzeugmaschine 14' an der Abtriebseinheit 16' der tragbaren Werkzeugmaschine 14' fixierbar. Die Schnellspannvorrichtung 76' ist vorzugsweise an einer Spindel, insbesondere an einer Hohlspindel, der Abtriebseinheit 16' angeordnet. Die Schnellspannvorrichtung 76' ist vorzugsweise drehfest mit der Spindel, insbesondere mit der Hohlspindel, der Abtriebseinheit 16' verbunden.

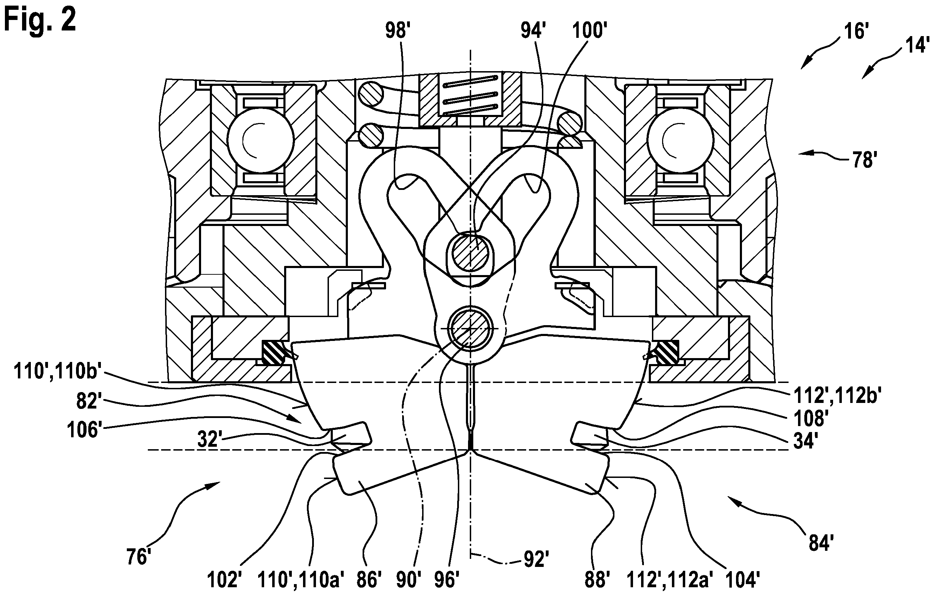

Figur 2 zeigt eine Schnittansicht der an der Abtriebseinheit 16' angeordneten Schnellspannvorrichtung 76'. Die Schnellspannvorrichtung 76' umfasst zumindest eine Mitnahmeeinrichtung 82' und eine relativ zur Mitnahmeeinrichtung 82' bewegbare Klemmeinrichtung 84'. Die Klemmeinrichtung 84' weist vorzugsweise zumindest zwei als Hakenbacken ausgebildete Hakeneinrichtungen 86', 88' auf, welche relativ zueinander um eine Klemmeinrichtungsdrehachse 90' der Klemmeinrichtung 84' schwenkbar und/oder drehbar gelagert sind. Die Hakeneinrichtungen 86', 88' sind in Figur 2 in einem Lösezustand der Klemmeinrichtung 84' dargestellt. Bevorzugt sind beide Hakeneinrichtungen 86', 88' synchron bewegbar. Es ist jedoch auch denkbar, dass die Hakeneinrichtungen 86', 88' in einer alternativen Ausgestaltung der Klemmeinrichtung 84' unabhängig voneinander bewegbar sind. Die Klemmeinrichtung 84' umfasst zumindest ein als Führungsbolzen ausgebildetes Führungselement 94' auf, an bzw. um dem/den die Hakeneinrichtungen 86', 88' geführt wird, und zumindest ein als Lagerungsbolzen ausgebildetes Lagerungselement 96' auf, welches dazu vorgesehen ist, die Hakeneinrichtungen 86', 88' um die Klemmeinrichtungsdrehachse 90' des Lagerungselement 96' schwenkbar und/oder drehbar zu lagern. Die Klemmeinrichtung 84' weist zumindest zwei als Führungsnuten ausgebildete Führungsausnehmungen 98', 100' auf, welche jeweils eine Führungsbahn zur Führung der Hakeneinrichtungen 86', 88' bilden. Jeweils eine der Führungsausnehmungen 98', 100' ist an einer einzelnen der Hakeneinrichtungen 86', 88' angeordnet. Das Führungselement 94' greift in beide Führungsausnehmungen 98', 100' ein und ist dazu vorgesehen, die Hakeneinrichtungen 86', 88' zu bewegen. Die beiden Hakeneinrichtungen 86', 88' sind vorzugsweise symmetrisch zueinander ausgeführt. Die Führungsausnehmungen 98', 100' sind bevorzugt symmetrisch zueinander ausgeführt. Vorzugsweise ist die Bewegung der beiden Hakeneinrichtungen 86', 88' im Wesentlichen synchron, so dass beide Hakeneinrichtungen 86', 88' gemeinsam entweder in eine Befestigungsposition oder in einer Löseposition bewegbar sind.

Die Hakeneinrichtungen 86', 88' stehen gegenüber der Mitnahmeeinrichtung 82' in einem Lösezustand der Klemmeinrichtung 84' in axialer Richtung zu einer Abtriebsachse 92' der Abtriebseinheit 16' ab. Im Lösezustand der Klemmeinrichtung 84' ist das Einsatzwerkzeug 72' von der Schnellspannvorrichtung 76' und/oder von der Abtriebseinheit 16' abnehmbar. Die Abtriebseinheit 16' ist insbesondere rotierend um die Abtriebsachse 92' antreibbar. Die Hakeneinrichtungen 86', 88' stehen gegenüber der Mitnahmeeinrichtung 82' in einem Lösezustand der Klemmeinrichtung 84' in axialer Richtung zur Abtriebsachse 92' weiter ab als in einem Befestigungszustand der Klemmeinrichtung 84'. Im Befestigungszustand der Klemmeinrichtung 84' ist das Einsatzwerkzeug 72' an der Schnellspannvorrichtung 76' und/oder an der Abtriebseinheit 16' axial und/oder drehfest fixiert, insbesondere mittels der Klemmeinrichtung 84' und/oder der Mitnahmeeinrichtung 82'.

Die Hakeneinrichtungen 86', 88' stehen in einem Lösezustand der Klemmeinrichtung 84', in dem die Hakeneinrichtungen 86', 88' in der Löseposition angeordnet sind, gegenüber der Mitnahmeeinrichtung 82' in axialer Richtung der Abtriebsachse 92' ab. Die Hakeneinrichtungen 86', 88' stehen gegenüber der Mitnahmeeinrichtung 82' in einem Lösezustand der Klemmeinrichtung 84' in axialer Richtung der Abtriebsachse 92' weiter ab als in einem Befestigungszustand, in dem die Hakeneinrichtungen 86', 88' in der Befestigungsposition angeordnet sind. Das Führungselement 94' erstreckt sich zumindest im Wesentlichen senkrecht zur Abtriebsachse 92'. Das Führungselement 94' bildet vorzugsweise die Klemmeinrichtungsdrehachse 90'. Die Hakeneinrichtungen 86', 88' sind um die Klemmeinrichtungsdrehachse 90' schwenkbar gelagert.

Mit den Hakeneinrichtungen 86', 88' sind in Abhängigkeit von einem gegenüber der Abtriebsachse 92' angewinkelten Schwenkwinkels einer Klemmfläche 102', 104' der Klemmeinrichtung 84' Einsatzwerkzeug 72' unterschiedlicher Abmessungen, insbesondere unterschiedlicher Materialstärken, mittels der Klemmeinrichtung 84' fixierbar. Die Hakeneinrichtungen 86', 88' weisen jeweils zumindest eine radiale Klemmausnehmung 106', 108' auf, welche dazu vorgesehen ist, das Einsatzwerkzeug 72', insbesondere eine Sicherungseinheit 20' einer Schleifmittelvorrichtung 10' des Einsatzwerkzeugs 72', in einem Befestigungszustand zumindest in axialer Richtung der Abtriebsachse 92' zu klemmen und in einem Lösezustand freizugeben. Die Klemmausnehmungen 106', 108' weisen jeweils wenigstens eine Klemmfläche 102', 104' zu einer Übertragung von einer zumindest axialen Kraftwirkung auf das Einsatzwerkzeug 72', insbesondere die Sicherungseinheit 20' der Schleifmittelvorrichtung 10' des Einsatzwerkzeugs 72', auf. Die Klemmausnehmung 106', 108' ist jeweils als eine sich in radialer Richtung der Abtriebsachse 92' erstreckende Klemmvertiefung ausgeführt. Die Klemmfläche 102', 104' erstreckt sich jeweils im Befestigungszustand quer, insbesondere zumindest im Wesentlichen senkrecht zur Abtriebsachse 92'. Die Klemmfläche 102', 104' ist jeweils in axialer Richtung der Abtriebsachse A zur tragbaren Werkzeugmaschine 14 hin orientiert. Die Klemmfläche 102', 104' ist jeweils eben ausgeführt. Die Klemmfläche 102', 104' kann zumindest abschnittsweise gekrümmt ausgeführt sein. Vorzugsweise kontaktiert die Klemmfläche 102', 104' das Einsatzwerkzeug 72', insbesondere die Sicherungseinheit 20' der Schleifmittelvorrichtung 10' des Einsatzwerkzeugs 72', wenigstens abschnittsweise in Form einer Punkt-, bevorzugt in Form einer Linien- und besonders bevorzugt in Form einer Flächenberührung. Dabei kann sich die Form der Berührung insbesondere in Abhängigkeit von einer Materialstärke der Sicherungseinheit 20', insbesondere eines Axialsicherungselements 22', 24' der Sicherungseinheit 20', ändern.

Die Hakeneinrichtungen 86', 88' der Klemmeinrichtung 84' weisen jeweils zumindest eine Umfangsfläche 110', 112' auf, welche eine maximale radiale Erstreckung der Hakeneinrichtungen 86', 88' begrenzt. Die Umfangsflächen 110', 112' der Hakeneinrichtungen 86', 88' sind voneinander weg orientiert. Die Hakeneinrichtungen 86', 88' weisen jeweils eine erste Umfangsfläche 110a', 112a' und eine zweite Umfangfläche 110b', 112b' auf, welche in axialer Richtung durch die Klemmausnehmung 106', 108' getrennt sind. Die erste und die zweite Umfangfläche 110a', 112a', 110b', 112b' begrenzen eine radiale Erstreckung der Klemmausnehmung 106', 108'. Die erste Umfangsfläche 110a', 112a' ist zumindest um die Abtriebsachse 92' gekrümmt ausgebildet.

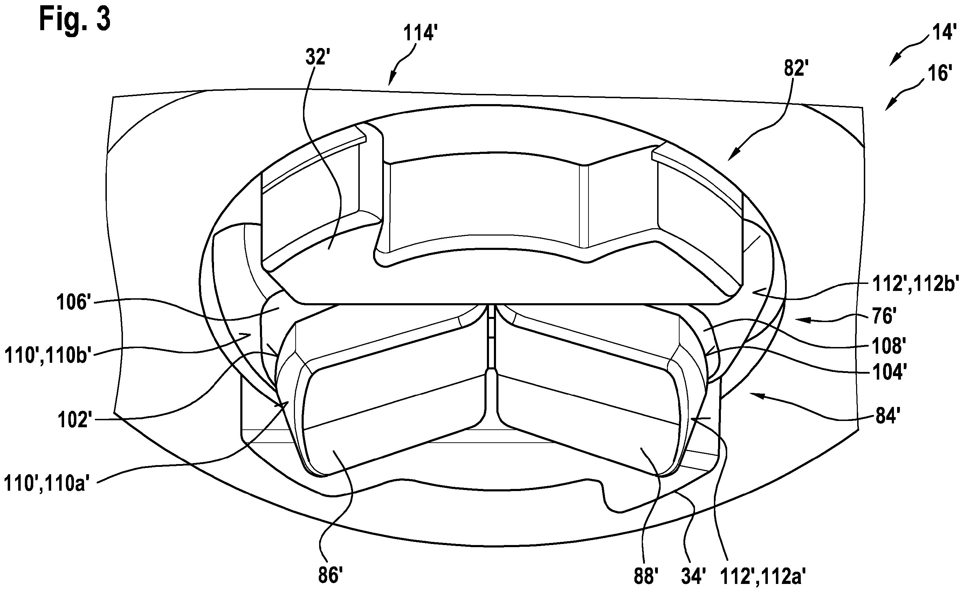

Figur 3 zeigt eine Detailansicht der Mitnahmeeinrichtung 82' und der Klemmeinrichtung 84'. Die Mitnahmeeinrichtung 82' umfasst zu einer Übertragung einer Antriebskraft auf das Einsatzwerkzeug 72', insbesondere auf die Sicherungseinheit 20' und/oder eine Aufnahmeeinheit 18' der Schleifmittelvorrichtung 10', zumindest einen Drehmomentübertragungsbereich 114'. Der Drehmomentübertragungsbereich 114' umfasst zumindest zwei Drehmomentübertragungsfortsätze 32', 34'. Jeder der Drehmomentübertragungsfortsätze 32', 34' weist zumindest eine geradlinige Abtriebskante und/oder eine ebene Abtriebsfläche auf. Die Abtriebskante und/oder die Abtriebsfläche erstrecken sich zumindest im Wesentlichen parallel zu einer radialen Richtung in Bezug zu der Abtriebsachse 92'. Die Abtriebskante und/oder die Abtriebsfläche sind entgegen einer Drehrichtung der Abtriebseinheit 16' angewinkelt. Die Drehmomentübertragungsfortsätze 32', 34' sind gemäß einer n-zähligen Symmetrie gleichmäßig an der Mitnahmeeinrichtung 82' angeordnet.

Die Mitnahmeeinrichtung 82' kann als eine Schutzeinrichtung ausgebildet sein. Die Mitnahmeeinrichtung 82' weist vorzugsweise eine maximale radiale Erstreckung auf, die größer ist als eine maximale radiale Erstreckung der Klemmeinrichtung 84' in einem Befestigungszustand, wodurch die bei einem rotatorischen Antrieb der Schnellspannvorrichtung 76' in radialer Richtung der Abtriebsachse 92' abstehenden Drehmomentübertragungsfortsätze 32', 34' einen Schutz der Hakeneinrichtungen 86', 88' gewährleistet, indem die Hakeneinrichtungen 86', 88' im Betrieb der tragbaren Werkzeugmaschine 14' bei einem versehentlichen Kontakt mit einem Werkstück die Hakeneinrichtungen 86', 88' durch die Drehmomentübertragungsfortsätze 32', 34' geschützt sind. Insbesondere können die Hakeneinrichtungen 86', 88' gegenüber den Drehmomentübertragungsfortsätzen 32', 34' in einem Lösezustand der Klemmeinrichtung 84' in axialer Richtung der Abtriebsachse 92' in einer von der Klemmeinrichtung 84' weg orientierten Richtung abstehen.

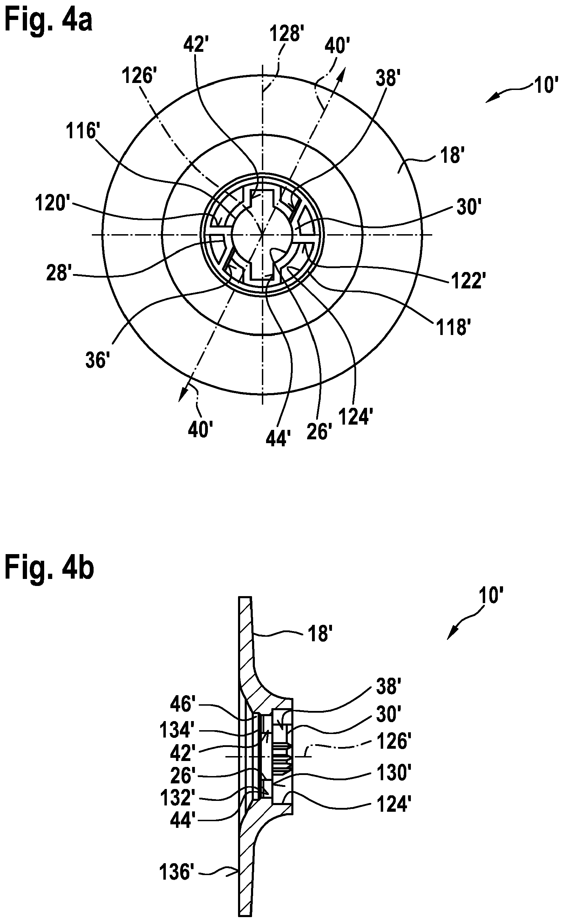

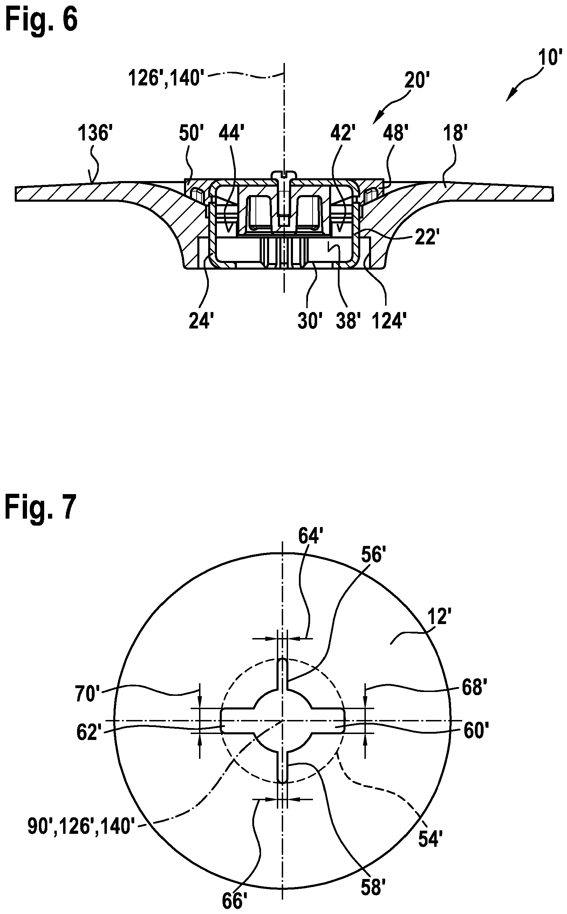

Figur 4a zeigt eine Draufsicht auf die Aufnahmeeinheit 18' der Schleifmittelvorrichtung 10' des Einsatzwerkzeugs 72'. Das Einsatzwerkzeug 72' umfasst zumindest die Schleifmittelvorrichtung 10' und zumindest ein an der Schleifmittelvorrichtung 10' anordenbares Schleifmittel 12'. Das Schleifmittel 12' ist vorzugsweise als Schleifscheibe, insbesondere als Fiberscheibe ausgebildet. Eine Ausgestaltung des Schleifmittels 12' wird später in der Beschreibung zu Figur 7 näher erläutert.

Die Schleifmittelvorrichtung 10' ist vorzugsweise als Schleifmittelhaltevorrichtung ausgebildet. Besonders bevorzugt ist die Schleifmittelvorrichtung 10' als Schleiftellervorrichtung oder Stütztellervorrichtung ausgebildet. Die Schleifmittelvorrichtung 10' ist zu einer Anordnung von dem zumindest einen Schleifmittel 12', insbesondere von der zumindest einen Schleifscheibe, an der tragbaren Werkzeugmaschine 14', insbesondere an der Schnellspannvorrichtung 76', vorgesehen. Die Schleifmittelvorrichtung 10' umfasst zumindest die, insbesondere gewindefrei an der Abtriebseinheit 16' der tragbaren Werkzeugmaschine 14' fixierbare, Aufnahmeeinheit 18', an der das zumindest eine Schleifmittel 12' anordenbar ist. Die Aufnahmeeinheit 18' ist bevorzugt als Schleifteller oder als Stützteller ausgebildet. Ferner umfasst die Schleifmittelvorrichtung 10' die zumindest eine, insbesondere getrennt von der Aufnahmeeinheit 18' ausgebildete, Sicherungseinheit 20' zumindest zu einer axialen Fixierung der Aufnahmeeinheit 18' und/oder des Schleifmittels an der Abtriebseinheit 16' der tragbaren Werkzeugmaschine 14'. Die Sicherungseinheit 20' ist zumindest zu einer werkzeuglosen axialen Fixierung der Aufnahmeeinheit 18' und/oder des Schleifmittels 12' an der Abtriebseinheit 16' der tragbaren Werkzeugmaschine 14' und/oder zumindest zu einer werkzeuglosen axialen Fixierung des Schleifmittels 12' an der Aufnahmeeinheit 18' vorgesehen (vgl. Figur 6).

Die Aufnahmeeinheit 18' weist in einem Nahberiech einer Aufnahmeausnehmung 26' der Aufnahmeeinheit 18', in die die Sicherungseinheit 20' zumindest teilweise eingreift, zumindest ein Drehmomentübertragungselement 28', 30' auf, das zumindest in einem an der Abtriebseinheit 16' der tragbaren Werkzeugmaschine 14', insbesondere an der Schnellspannvorrichtung 76', angeordneten Zustand der Aufnahmeeinheit 18' dazu vorgesehen ist, mit einem der Drehmomentübertragungsfortsätze 32', 34' der tragbaren Werkzeugmaschine 14', insbesondere der Mitnahmeeinrichtung 82' zusammenzuwirken. Die Aufnahmeeinheit 18' umfasst das zumindest eine Drehmomentübertragungselement 28', 30', das zumindest eine Anlagefläche 36', 38' aufweist, die zumindest im Wesentlichen parallel zu einer Radialrichtung 40' der Aufnahmeeinheit 18' verläuft. Insbesondere weist die Aufnahmeeinheit 18' zumindest zwei Drehmomentübertragungselemente 28', 30' auf, die vorzugsweise zumindest im Wesentlichen analog ausgestaltet sind. Vorzugsweise sind die Drehmomentübertragungselemente 28', 30' symmetrisch, insbesondere gemäß einer n-zähligen Symmetrie, an der Aufnahmeeinheit 18' angeordnet. Die Drehmomentübertragungselemente 28', 30' sind vorzugsweise in einem an der Abtriebseinheit 16' angeordneten Zustand der Aufnahmeeinheit 18' an einer der tragbaren Werkzeugmaschine 14' abgewandten Seite der Aufnahmeeinheit 18' angeordnet, insbesondere zumindest teilweise in der Aufnahmeausnehmung 26' der Aufnahmeeinheit 18'. Es ist denkbar, dass, insbesondere in einem an der Abtriebseinheit 16' angeordneten Zustand der Aufnahmeeinheit 18' an einer der tragbaren Werkzeugmaschine 14' betrachtet, an einer der Abtriebseinheit 16' zugewandten Seite der Drehmomentübertragungselemente 28', 30' ein Sicherungselement der Aufnahmeeinheit 18' angeordnet ist, das dazu vorgesehen, ist ein ungewolltes Lösen der Aufnahmeeinheit 18' von der Abtriebseinheit 16', insbesondere ein durch eine Schwerkraft bedingtes Herunterfallen der Aufnahmeeinheit 18' nach einer Aufhebung einer Fixierung an der Abtriebseinheit 16', zu vermeiden. Das Sicherungselement der Aufnahmeeinheit 18' kann als Kraftschlusselement und/oder als Formschlusselement, wie beispielsweise als ein an der Mitnahmeeinrichtung 82' anlegbares Gummielement, insbesondere O-Ring, als federelastisches Rastelement, als Sicherungsclip o. dgl. ausgebildet sein, das insbesondere zusätzlich zur Sicherungseinheit 20' zu einem Aufbringen einer Haltekraft zu einem Halten der Aufnahmeeinheit 18' an der Abtriebseinheit 16' vorgesehen ist.

Die Drehmomentübertragungselemente 28', 30' werden vorzugsweise durch einen inneren Begrenzungskreis 116' und einen äußeren Begrenzungskreis 118' einer Mitnahmeausnehmung 124', in die die Mitnahmeeinrichtung 82' zumindest teilweise eingreift, sowie eine Anlagefläche 36', 38' und eine Rückseitenfläche 120', 122' der Drehmomentübertragungselemente 28', 30' begrenzt. Die Mitnahmeeinrichtung 82' greift bevorzugt in einem an der Abtriebseinheit 16' angeordneten Zustand der Aufnahmeeinheit 18' zumindest teilweise in die Mitnahmeausnehmung 124' ein und/oder liegt an einem die Mitnahmeausnehmung 124' begrenzenden Randbereich der Aufnahmeeinheit 18' an. Der innere Begrenzungskreis 116' weist vorzugsweise einen maximalen Durchmesser von weniger als 30 mm, insbesondere einen maximalen Durchmesser von 23 mm, auf. Der innere Begrenzungskreis 116' ist vorzugsweise dazu vorgesehen, eine zumindest teilweise Einführung der Sicherungseinheit 20' in die Aufnahmeeinheit 18' zu ermöglichen. Der innere Begrenzungskreis 116' begrenzt die Aufnahmeausnehmung 26' in eine zumindest im Wesentlichen senkrecht zu einer Rotationsachse 126' der Aufnahmeeinheit 18' verlaufende Richtung, insbesondere in eine von der Rotationsachse 126' abgewandte Richtung. Der äußere Begrenzungskreis 118' weist vorzugsweise einen maximalen Durchmesser von weniger als 50 mm, insbesondere einen maximalen Durchmesser mit einem Wert aus einem Wertebereich von 28 mm bis 42 mm, bevorzugt einen maximalen Durchmesser von 39 mm, auf. Der äußere Begrenzungskreis 118' begrenzt die Mitnahmeausnehmung 124' in eine zumindest im Wesentlichen senkrecht zur Rotationsachse 126' der Aufnahmeeinheit 18' verlaufende Richtung, insbesondere in eine von der Rotationsachse 126' abgewandte Richtung. Der innere Begrenzungskreis 116' ist vorzugsweise dazu vorgesehen, eine Schutzfunktion zu ermöglichen, die eine ungewollte Betätigung der Klemmeinrichtung 84' durch die Aufnahmeeinheit 18' zumindest weitestgehend verhindert, insbesondere da der innere Begrenzungskreis 116' eine größere Abmessung aufweist als eine maximale radiale Erstreckung der Klemmeinrichtung 84'.

Die Anlageflächen 36', 38' der Drehmomentübertragungselemente 28', 30' erstrecken sich vorzugsweise zwischen dem inneren Begrenzungskreis 116' und dem äußeren Begrenzungskreis 118'. Vorzugsweise verlaufen die Anlageflächen 36', 38' der Drehmomentübertragungselemente 28', 30' quer zu einer Tangentialrichtung des inneren Begrenzungskreises 116' und des äußeren Begrenzungskreises 118'. Vorzugsweise sind die Anlageflächen 36', 38' der Drehmomentübertragungselemente 28', 30' jeweils relativ zu der, insbesondere durch die Rotationsachse 126' der Aufnahmeeinheit 18' verlaufenden, Radialrichtung 40' der Aufnahmeeinheit 18' versetzt angeordnet. Vorzugsweise weisen die Anlageflächen 36', 38' der Drehmomentübertragungselemente 28', 30' einen, insbesondere senkrecht zu den Anlagefläche 36', 38' verlaufenden, maximalen Abstand zu der, insbesondere durch die Rotationsachse 126 der Aufnahmeeinheit 18' verlaufende, Radialrichtung 40' der Aufnahmeeinheit 18' auf, der insbesondere kleiner ist als 10 mm, bevorzugt kleiner ist als 8 mm, besonders bevorzugt kleiner ist als 7 mm und ganz besonders bevorzugt größer ist als 5 mm. Bevorzugt sind die Anlageflächen 36', 38' der Drehmomentübertragungselemente 28', 30' jeweils in Bezug auf eine Mittelachse 128', insbesondere ein Symmetrieachse der Aufnahmeausnehmung 26', um einen Winkel von weniger als 45°, insbesondere von 25°, abgewinkelt angeordnet.

Die Rückseitenflächen 120', 122' der Drehmomentübertragungselemente 28', 30' erstrecken sich vorzugsweise zwischen dem inneren Begrenzungskreis 116' und dem äußeren Begrenzungskreis 118'. Vorzugsweise verlaufen die Rückseitenflächen 120', 122' der Drehmomentübertragungselemente 28', 30' quer, insbesondere zumindest im Wesentlichen senkrecht zur Tangentialrichtung des inneren Begrenzungskreises 116' und des äußeren Begrenzungskreises 118'. Vorzugsweise sind die Rückseitenflächen 120', 122' der Drehmomentübertragungselemente 28', 30' jeweils relativ zu der, insbesondere durch die Rotationsachse 126' der Aufnahmeeinheit 18' verlaufenden, Radialrichtung 40' der Aufnahmeeinheit 18' versetzt angeordnet. Vorzugsweise weisen die Rückseitenflächen 120', 122' der Drehmomentübertragungselemente 28', 30' einen, insbesondere senkrecht zu den Rückseitenflächen 120', 122' verlaufenden, maximalen Abstand zu der, insbesondere durch die Rotationsachse 126' der Aufnahmeeinheit 18' verlaufende, Radialrichtung 40' der Aufnahmeeinheit 18' auf, der insbesondere kleiner ist als 8 mm, bevorzugt kleiner ist als 6 mm, besonders bevorzugt kleiner ist als 5 mm und ganz besonders bevorzugt größer ist als 4 mm. Bevorzugt sind die Rückseitenflächen 120', 122' der Drehmomentübertragungselemente 28', 30' jeweils in Bezug auf eine Mittelachse 128', insbesondere die Symmetrieachse der Aufnahmeausnehmung 26', um einen Winkel von mehr als 45°, insbesondere von 90°, abgewinkelt angeordnet.

Die Mitnahmeausnehmung 124' erstreckt sich ausgehend von einer der tragbaren Werkzeugmaschine 14' zugewandten Außenfläche der Aufnahmeeinheit 18', die insbesondere zumindest im Wesentlichen senkrecht zur Rotationsachse 126' der Aufnahmeeinheit 18' verläuft, entlang einer zumindest im Wesentlichen parallel zur Rotationsachse 126' der Aufnahmeeinheit 18' verlaufenden Richtung maximal bis zu einer Verbindungsfläche 130' der Aufnahmeeinheit 18', an der die Mitnahmeeinrichtung 82' in einem an der Abtriebseinheit 16' angeordneten Zustand der Aufnahmeeinheit 18' zumindest teilweise anliegt. Ein maximaler Abstand, insbesondere entlang der zumindest im Wesentlichen parallel zur Rotationsachse 126' der Aufnahmeeinheit 18' verlaufenden Richtung, zwischen der Verbindungsfläche 130' der Aufnahmeeinheit 18' und der Außenfläche der Aufnahmeeinheit 18' ist insbesondere kleiner als 10 mm, bevorzugt kleiner als 8 mm, besonders bevorzugt kleiner als 7 mm und ganz besonders bevorzugt größer als 5 mm (vgl. Figur 4b).

Die Aufnahmeeinheit 18' weist zumindest die Aufnahmeausnehmung 26' auf, in die die Sicherungseinheit 20' zumindest teilweise eingreift, wobei zumindest ein die Aufnahmeausnehmung 26' zumindest teilweise begrenzender Randbereich der Aufnahmeeinheit 18' zumindest eine Kontaktfläche 42', 44' zu einer Übertragung einer Antriebskraft und/oder eines Antriebsdrehmoments auf die Sicherungseinheit 20' bildet. Vorzugsweise bildet der die Aufnahmeausnehmung 26' zumindest teilweise begrenzende Randbereich der Aufnahmeeinheit 18' zumindest zwei Kontaktflächen 42', 44'. Die Kontaktflächen 42', 44' sind jeweils vorzugsweise relativ zu den Anlageflächen 36', 38' der Drehmomentübertragungselemente 28', 30' versetzt angeordnet, insbesondere entlang einer zumindest im Wesentlichen parallel zur Rotationsachse 126' der Aufnahmeeinheit 18' verlaufenden Richtung. Die Kontaktflächen 42', 44' verlaufen jeweils vorzugsweise quer zu den Anlageflächen 36', 38' des Drehmomentübertragungselements 28', 30'. Insbesondere sind die Kontaktflächen 42', 44' und die Anlageflächen 36', 38' relativ zueinander geneigt angeordnet, insbesondere um einen Winkel von weniger als 40°, bevorzugt von weniger als 30° und besonders bevorzugt von weniger als 26°. Bevorzugt verlaufen die Kontaktflächen 42', 44' zumindest im Wesentlichen parallel zu der, insbesondere durch die Rotationsachse 126' der Aufnahmeeinheit 18' verlaufenden, Radialrichtung 40' der Aufnahmeeinheit 18', vorzugsweise zur Mittelachse 128' der Aufnahmeausnehmung 26'. Vorzugsweise weisen die Kontaktflächen 42', 44' zu der, insbesondere durch die Rotationsachse 126' der Aufnahmeeinheit 18' verlaufenden, Radialrichtung 40' der Aufnahmeeinheit 18', vorzugsweise der Mittelachse 128' der Aufnahmeausnehmung 26', einen, insbesondere senkrecht zu den Kontaktflächen 42', 44' verlaufenden, maximalen Abstand auf, der insbesondere kleiner ist als 8 mm, bevorzugt kleiner ist als 6 mm, besondere bevorzugt kleiner ist als 5 mm und ganz besonders bevorzugt größer ist als 4 mm. Ein die Aufnahmeausnehmung 26' begrenzende Randfläche, die zumindest im Wesentlichen senkrecht zu zumindest einer der Kontaktflächen 42', 44' verläuft und insbesondere direkt angrenzend an die zumindest eine der Kontaktflächen 42', 44' verläuft, weist vorzugsweise einen maximalen Abstand, insbesondere einen senkrecht zur Randfläche verlaufenden maximalen Abstand, zur Rotationsachse 126' der Aufnahmeeinheit 18' auf, der insbesondere kleiner ist als 25 mm, bevorzugt kleiner ist als 22 mm, besonders bevorzugt kleiner ist als 18 mm und ganz besonders bevorzugt größer ist als 16 mm. Die die Aufnahmeausnehmung 26' begrenzende Randfläche, die zumindest im Wesentlichen senkrecht zu zumindest einer der Kontaktflächen 42', 44' verläuft und insbesondere direkt angrenzend an die zumindest eine der Kontaktflächen 42', 44' verläuft, ist vorzugsweise als radialer Anschlag der Sicherungseinheit 20', insbesondere der Axialsicherungselemente 22', 24' der Sicherungseinheit 20', vorgesehen.

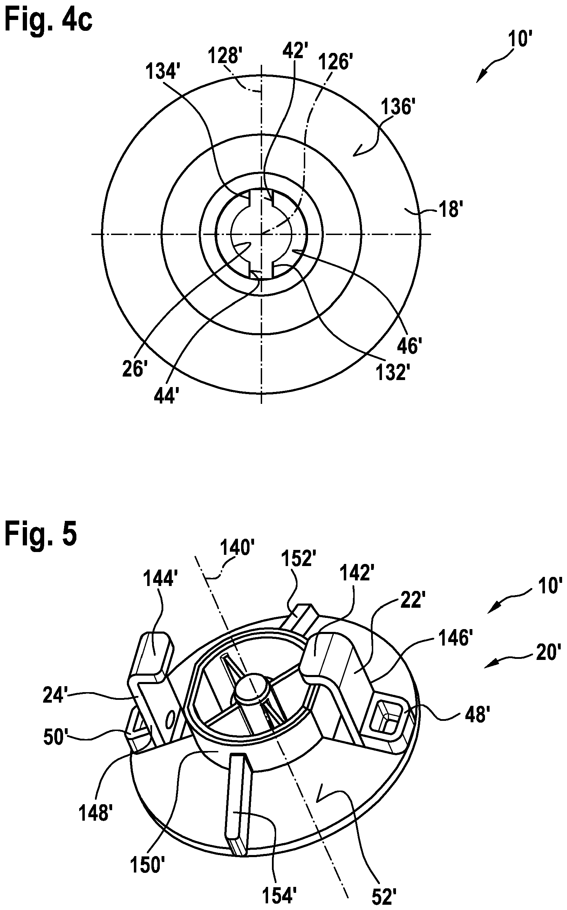

In einem Übergangsbereich zwischen den Kontaktflächen 42', 44' und der Verbindungsfläche 130' umfasst die Aufnahmeeinheit 18' jeweils zumindest eine Einführschräge 132', 134' (vgl. Figur 4c). Die Einführschrägen 132', 134' sind vorzugsweise zur Verbindungsfläche 130' der Aufnahmeeinheit 18' und/oder zu den Kontaktflächen 42', 44' abgewinkelt. Vorzugsweise schließen die Einführschrägen 132', 134' mit der Verbindungsfläche 130' der Aufnahmeeinheit 18' einen Winkel ein, der einem Wert aus einem Wertebereich von 30° bis 60°, insbesondere einem Wert von 45°, entspricht. Alternativ oder zusätzlich ist es denkbar, dass die Aufnahmeeinheit 18' in einem Übergangsbereich zwischen den Drehmomentübertragungselementen 28', 30' und der Verbindungsfläche 130', insbesondere weitere Einführschrägen aufweist, die relativ zur Verbindungsfläche 130' abgewinkelt sind, insbesondere einen Winkel mit der Verbindungsfläche 130' einschließt, der einem Wert aus einem Wertebereich von 30° bis 60°, insbesondere einem Wert von 45°, entspricht und zu einer komfortablen Anordnung der Aufnahmeeinheit 18' an der Mitnahmeeinrichtung 82' vorgesehen ist. Die Drehmomentübertragungselemente 28', 30', die Anlageflächen 36', 38', die Kontaktflächen 42', 44', die Rückseitenflächen 120', 122', die Aufnahmeausnehmung 26', die Mitnahmeausnehmung 124', die Verbindungsfläche 130' und die Einführschrägen 132', 136' sind vorzugsweise an einem Grundkörper der Aufnahmeeinheit 18' angeordnet, insbesondere einteilig mit dem Grundkörper ausgebildet, vorzugsweise mittels eines Spritzgussverfahrens.

Die Aufnahmeeinheit 18' weist zumindest eine Positionierausnehmung 46' zu einer Positionierung der Sicherungseinheit 20' auf, wobei die Positionierausnehmung 46' angrenzend an die Aufnahmeausnehmung 26' der Aufnahmeeinheit 18' angeordnet ist, die zumindest teilweise von zumindest einem Randbereich der Aufnahmeeinheit 18' begrenzt ist, der zu einer Übertragung von einer Antriebskraft und/oder eines Antriebsdrehmoments auf die Sicherungseinheit 20' vorgesehen ist. Vorzugsweise ist die Positionierausnehmung 46' an einer der Aufnahmeausnehmung 26' abgewandten Seite der Aufnahmeeinheit 18' angeordnet. Die Positionierausnehmung 46' weist vorzugsweise, insbesondere betrachtet entlang einer zumindest im Wesentlichen parallel zur Rotationsachse 126' der Aufnahmeeinheit 18' verlaufenden Richtung, eine maximale Tiefe auf, die insbesondere kleiner ist als 8 mm, bevorzugt kleiner ist als 6 mm, besonders bevorzugt kleiner ist als 3 mm und ganz besonders bevorzugt größer ist als 1 mm. Die Positionierausnehmung 46' weist bevorzugt eine entlang einer zumindest im Wesentlichen senkrecht zur Rotationsachse 126' der Aufnahmeeinheit 18' verlaufenden Richtung maximale Quererstreckung, insbesondere einen maximalen Durchmesser auf, der insbesondere kleiner ist als 50 mm, bevorzugt kleiner ist als 40 mm besonders bevorzugt kleiner ist als 36 mm und ganz besonders bevorzugt größer ist als 35 mm.

Die Aufnahmeeinheit 18' umfasst zumindest eine Schleifmittelanlagefläche 136', die an einer der Mitnahmeausnehmung 124' abgewandten Seite der Aufnahmeeinheit 18' angeordnet ist. Die Schleifmittelanlagefläche 136' ist zu einer Anlage des Schleifmittels 12' vorgesehen. In einem Übergangsbereich zwischen der Schleifmittelanlagefläche 136' und der Positionierausnehmung 46' weist die Aufnahmeeinheit 18' eine Schrägfläche auf. Die Schrägfläche schließt mit einer zumindest im Wesentlichen parallel zur Rotationsachse 126' der Aufnahmeeinheit 18' verlaufenden Ebene einen Winkel ein, der einen Wert aus einem Wertebereich von 14° bis 32°, insbesondere einem Wert von 25°, entspricht. Die Schrägfläche bildet vorzugsweise eine Anschlagfläche für die Sicherungseinheit 20', insbesondere für eine an Formschlusselementen 48', 50' der Sicherungseinheit 20' angeordnete Fläche.

Die Sicherungseinheit 20' umfasst zumindest das Axialsicherungselement 22', 24', das zu einer werkzeuglosen axialen Fixierung der Aufnahmeeinheit 18' und/oder des Schleifmittels 12' zumindest teilweise in die Aufnahmeeinheit 18', insbesondere in die Aufnahmeausnehmung 26' der Aufnahmeeinheit 18' eingreift (vgl. Figuren 5 und 6). Die Sicherungseinheit 20' umfasst das zumindest eine Axialsicherungselement 22', 24', das federelastisch auslenkbar ausgebildet ist (vgl. Figur 5). Vorzugsweise umfasst die Sicherungseinheit 20' zumindest zwei Axialsicherungselemente 22', 24', die insbesondere zumindest im Wesentlichen analog zueinander ausgebildet sind. Die Axialsicherungselemente 22', 24' sind vorzugsweise dazu vorgesehen, in die Klemmausnehmungen 106', 108' einzugreifen, insbesondere in einem an der Abtriebseinheit 16' angeordneten Zustand der Sicherungseinheit 20'. Die Axialsicherungselemente 22', 24' sind vorzugsweise als Rastelemente, insbesondere als Rasthaken, ausgebildet. Rastbereiche 142', 144' erstrecken sich vorzugsweise quer, insbesondere zumindest im Wesentlichen senkrecht, zu einer Mittelachse 140', insbesondere einer Rotationsachse, der Sicherungseinheit 20'. Fortsatzbereiche 146', 148' der Axialsicherungselemente 22', 24', die insbesondere direkt angrenzend an die Rastbereiche 142', 144' angeordnet sind, erstrecken sich entlang einer zumindest im Wesentlichen parallel zur Mittelachse 140', insbesondere zur Rotationsachse, der Sicherungseinheit 20' verlaufenden Richtung. Die Axialsicherungselemente 22', 24' können einteilig mit einem Grundkörper der Sicherungseinheit 20' ausgebildet sein oder separat zu dem Grundkörper der Sicherungseinheit 20' ausgebildet sein und insbesondere mittels einer, einem Fachmann als sinnvoll erscheinenden Verbindung, insbesondere einer form- und/oder kraftschlüssigen Verbindung, an dem Grundkörper der Sicherungseinheit fixiert sein. Die Axialsicherungselemente 22', 24', insbesondere die Rastbereiche 142', 144', weisen vorzugsweise einen minimalen Abstand zur Mittelachse 140', insbesondere zur Rotationsachse, der Sicherungseinheit 20' auf, der insbesondere kleiner ist als 22 mm, bevorzugt kleiner ist 15 mm, besonders bevorzugt kleiner ist als 12 mm und ganz besonders bevorzugt größer ist als 10 mm. Vorzugsweise weisen die Axialsicherungselemente 22', 24', insbesondere die Rastbereiche 142', 144', jeweils eine maximale Breite, insbesondere eine in einer zumindest im Wesentlichen senkrecht zur Mittelachse 140', insbesondere zur Rotationsachse, der Sicherungseinheit 20' verlaufenden Ebene betrachtet, von insbesondere weniger als 15 mm, bevorzugt von weniger als 12 mm, besonders bevorzugt von weniger als 10 mm und ganz besonders bevorzugt von mehr als 1,9 mm auf. Vorzugsweise weisen die Axialsicherungselemente 22', 24', insbesondere die Rastbereiche 142', 144', eine maximale Materialstärke auf, die insbesondere kleiner ist als 4 mm, bevorzugt kleiner ist als 3 mm, besonders bevorzugt kleiner ist als 2 mm und ganz besonders bevorzugt größer ist als 0,5 mm. Die Rastbereiche 142', 144' weisen vorzugsweise einen maximalen Abstand zu einer in einem an der Aufnahmeeinheit 18' angeordneten Zustand der Aufnahmeeinheit 18' abgewandten und zumindest im Wesentlichen senkrecht zur Mittelachse 140', insbesondere zur Rotationsachse, der Sicherungseinheit 20' verlaufenden Fläche der Sicherungseinheit 20' auf, der insbesondere kleiner ist als 30 mm, bevorzugt kleiner ist als 25 mm, besonders bevorzugt kleiner ist als 22 mm und ganz besonders bevorzugt größer ist als 14 mm. Die an den Formschlusselementen 48', 50' der Sicherungseinheit 20' angeordnete Fläche schließt vorzugsweise mit einer sich zumindest im Wesentlichen senkrecht zur Mittelachse 140', insbesondere zur Rotationsachse, der Sicherungseinheit 20' verlaufenden Ebene einen Winkel ein, der insbesondere kleiner ist als 35°, bevorzugt kleiner ist als 30°, besonders bevorzugt kleiner ist als 25° und ganz besonders bevorzugt größer ist als 14°.

Die Sicherungseinheit 20' umfasst zumindest einen Einführfortsatz 150', der dazu vorgesehen ist, in die zumindest teilweise in die Aufnahmeausnehmung 26' eingeführt zu werden und/oder zumindest teilweise in die Aufnahmeausnehmung 26' einzugreifen. Der Einführfortsatz 150' ist einteilig mit dem Grundkörper der Sicherungseinheit 20' ausgebildet, insbesondere angrenzend an eine Spannfläche 52' der Sicherungseinheit 20' angeordnet. Der Einführfortsatz 150' erstreckt sich bevorzugt quer, insbesondere zumindest im Wesentlichen senkrecht zur Spannfläche 52'.

Die Sicherungseinheit 20' weist zumindest das Formschlusselement 48', 50' zu einer Übertragung von einer Antriebskraft und/oder eines Antriebsdrehmoments auf das Schleifmittel 12' auf (vgl. Figur 5). Das Formschlusselement 48', 50' ist an der Spannfläche 52' der Sicherungseinheit 20' angeordnet, die zu einer axialen Fixierung des Schleifmittels 12' an der Aufnahmeeinheit 18' und/oder an der Abtriebseinheit 16' an dem Schleifmittel 12' anlegbar ist. Das Formschlusselement 48', 50' erstreckt sich bevorzugt entlang einer zumindest im Wesentlichen parallel zur Mittelachse 140', insbesondere zur Rotationsachse, der Sicherungseinheit 20' verlaufenden Richtung über die Spannfläche 52' hinweg. Vorzugsweise umfasst die Sicherungseinheit 20' zumindest zwei Formschlusselemente 48', 50'. Bevorzugt sind die zumindest zwei Formschlusselemente 48', 50' symmetrisch am Grundkörper der Sicherungseinheit 20' angeordnet, insbesondere gemäß einer n-zähligen Symmetrie. Vorzugsweise umfasst die Sicherungseinheit 20' zumindest ein weiteres Formschlusselement 152', 154', das zu einem Eingriff in das Schleifmittel 12' vorgesehen ist. Insbesondere umfasst die Sicherungseinheit 20' zumindest zwei weitere Formschlusselemente 152', 154'. Bevorzugt sind die zumindest zwei weiteren Formschlusselemente 152', 154' symmetrisch am Grundkörper der Sicherungseinheit 20' angeordnet, insbesondere gemäß einer n-zähligen Symmetrie. Die weiteren Formschlusselemente 152', 154' erstrecken sich vorzugsweise zumindest im Wesentlichen senkrecht zu den Formschlusselementen 48', 50'. Die weiteren Formschlusselemente 48', 50' weisen bevorzugt eine geringere maximale Breitenerstreckung auf als die Formschlusselement 48', 50' (vgl. Figur 5). Die Formschlusselemente 48', 50' weisen eine maximale Breitenerstreckung auf, die insbesondere kleiner ist als 15 mm, bevorzugt kleiner ist als 12 mm, besonders bevorzugt kleiner ist als 10 mm und ganz besonders bevorzugt größer ist als 3 mm. Die weiteren Formschlusselemente 152', 154' weisen eine maximale Breitenerstreckung auf, die insbesondere kleiner ist als 8 mm, bevorzugt kleiner ist als 5 mm, besonders bevorzugt kleiner ist als 3 mm und ganz besonders bevorzugt größer ist als 2 mm.

Figur 7 zeigt eine Detailansicht des Schleifmittels 12' des Einsatzwerkzeugs 72', das mittels der Schleifmittelvorrichtung 10' des Einsatzwerkzeugs 72' an der Abtriebseinheit 16' fixierbar ist, insbesondere axial und/oder in Umfangsrichtung. Das Schleifmittel 12', insbesondere eine Schleifscheibe, ist bevorzugt mittels der Schleifmittelvorrichtung 10' an der tragbaren Werkzeugmaschine 14' fixierbar.

Das Schleifmittel 12' umfasst zumindest eine Kopplungseinheit 54' zu einer, insbesondere form- und/oder kraftschlüssigen, Verbindung mit der Sicherungseinheit 20' der Schleifmittelvorrichtung 10', wobei die Kopplungseinheit 54' zumindest zwei unterschiedlich ausgestaltete Verbindungselemente 56', 58', 60', 62', insbesondere Verbindungsausnehmungen, aufweist. Die Formschlusselemente 48', 50' und die weiteren Formschlusselemente 152', 154' sind vorzugsweise dazu vorgesehen, in die Verbindungselemente 56', 58', 60', 62' einzugreifen. Die zumindest zwei unterschiedlich ausgestalteten Verbindungselemente 56', 58', 60', 62' weisen zumindest unterschiedliche maximale Breitenerstreckungen 64', 66', 68', 70' auf. Zumindest zwei der Verbindungselemente 56', 58', 60', 62' sind korrespondierend zu den Formschlusselementen 48', 50' ausgebildet. Zumindest zwei der der Verbindungselemente 56', 58', 60', 62' sind korrespondierend zu den weiteren Formschlusselementen 152', 154' ausgebildet. Zumindest zwei der der Verbindungselemente 56', 58', 60', 62' sind jeweils gemäß einer n-zähligen Symmetrie am Schleifmittel 12' angeordnet.

Zu einer Fixierung des Schleifmittels 12' ist die Aufnahmeeinheit 18' an der Schnellspannvorrichtung 76' anordenbar. Das Schleifmittel 12' ist an der Aufnahmeeinheit 18' anordenbar. Die Sicherungseinheit 20' ist an der Aufnahmeeinheit 18' und/oder an der Schnellspannvorrichtung 76' anordenbar. Infolge eines Zusammenwirkens der Axialsicherungselemente 22', 24' ist das Schleifmittel 12' und/oder die Aufnahmeeinheit 18' an der Schnellspannvorrichtung 76' axial fixierbar. Infolge eines Eingriffs der Formschlusselemente 48', 50' und/oder der weiteren Formschlusselemente 152', 154' in die Verbindungselement 56', 58', 60', 62' ist eine Übertragung von der Abtriebseinheit 16' über die Aufnahmeeinheit 18' und über die Sicherungseinheit 20' durch eine formschlüssige Verbindung auf das Schleifmittel 12' realisierbar. Das Schleifmittel 12' ist vorzugsweise mittels eines Zusammenwirkens der Axialsicherungselement 22', 24' und der Klemmeinrichtung 84' durch die Spannfläche 52' der Sicherungseinheit 20' an die Schleifmittelanlagefläche 136' der Aufnahmeeinheit 18' anlegbar und/oder andrückbar. Es ist vorteilhaft eine sichere Verbindung des Schleifmittels 12' an der Abtriebseinheit 16' mittels der Schleifmittelvorrichtung 10' realisierbar.

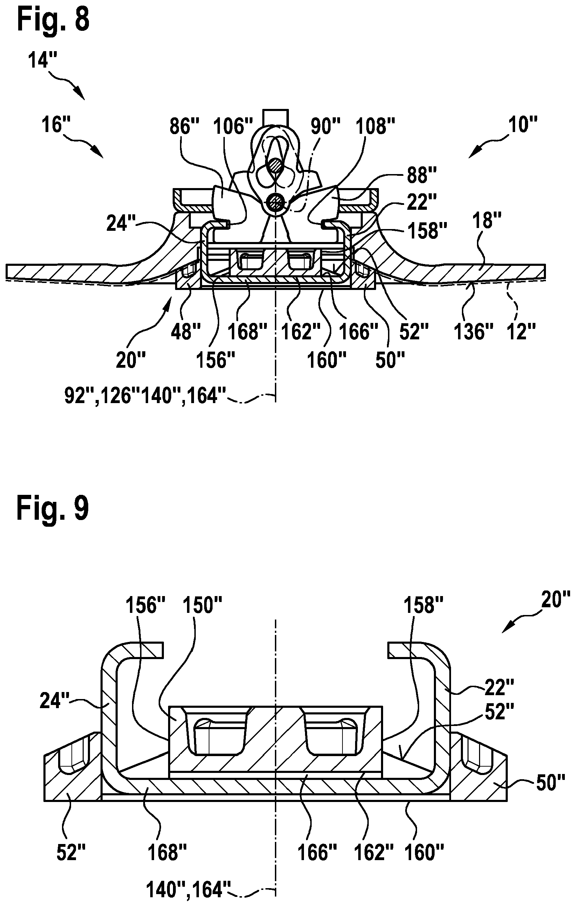

In Figuren 8 und 9 ist ein erfindungsgemäßes Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist den Bezugszeichen des Ausführungsbeispiels in den Figuren 1 bis 7 ein Oberstrich nachgestellt. In dem erfindungsgemäßen Ausführungsbeispiel der Figuren 8 und 9 sind den Bezugszeichen zwei Oberstriche nachgestellt.

Figur 8 zeigt eine Schnittansicht der erfindungsgemäßen Schleifmittelvorrichtung 10" in einem an einer in Figur 8 lediglich teilweise dargestellten Schnellspannvorrichtung 76" einer tragbaren Werkzeugmaschine 14" angeordneten Zustand, wobei ein Schleifmittel 12" (in Figur 8 lediglich gestrichelt angedeutet) mittels eines Zusammenwirkens der Schnellspannvorrichtung 76" der Schleifmittelvorrichtung 10" an einer Abtriebseinheit 16" der tragbaren Werkzeugmaschine 14" fest gespannt ist. Hinsichtlich einer Ausgestaltung der tragbaren Werkzeugmaschine 14", insbesondere der Schnellspannvorrichtung 76" der tragbaren Werkzeugmaschine 14", darf auf die Beschreibung der Figuren 1 bis 7 verwiesen werden, die analog auf die in Figur 8 zumindest teilweise dargestellte tragbare Werkzeugmaschine 14", insbesondere die in Figur 8 dargestellte Schnellspannvorrichtung 76" der tragbaren Werkzeugmaschine 14", zu lesen ist.

Die Schleifmittelvorrichtung 10" ist vorzugsweise als Schleiftellervorrichtung oder Stütztellervorrichtung ausgebildet. Die Schleifmittelvorrichtung 10" ist zu einer Anordnung des Schleifmittels 12", insbesondere einer Schleifscheibe, an der tragbaren Werkzeugmaschine 14", insbesondere einer Schleifmaschine, vorgesehen. Die Schleifmittelvorrichtung 10" umfasst zumindest eine, insbesondere gewindefrei an der Abtriebseinheit 16" der tragbaren Werkzeugmaschine 14" fixierbare, Aufnahmeeinheit 18", insbesondere Schleifteller oder Stützteller, an der zumindest das Schleifmittel 12" anordenbar ist, und zumindest eine, insbesondere getrennt von der Aufnahmeeinheit 18" ausgebildete, Sicherungseinheit 20" zumindest zu einer axialen Fixierung der Aufnahmeeinheit 18" und/oder des Schleifmittels 12" an der Abtriebseinheit 16" der tragbaren Werkzeugmaschine 14". Die Sicherungseinheit 20" ist zumindest zu einer werkzeuglosen axialen Fixierung der Aufnahmeeinheit 18" und/oder des Schleifmittels 12" an der Abtriebseinheit 16" der tragbaren Werkzeugmaschine 14" und/oder zumindest zu einer werkzeuglosen axialen Fixierung des Schleifmittels 12" an der Aufnahmeeinheit 18" vorgesehen. Die Sicherungseinheit 20" umfasst zumindest ein Axialsicherungselement 22", 24", das zu einer werkzeuglosen axialen Fixierung der Aufnahmeeinheit 18" und/oder des Schleifmittels 12" zumindest teilweise in die Aufnahmeeinheit 18", insbesondere in eine Aufnahmeausnehmung 26" der Aufnahmeeinheit 18" eingreift. Das zumindest eine Axialsicherungselement 22", 24" ist federelastisch ausgebildet. Vorzugsweise umfasst die Sicherungseinheit 20" zumindest zwei Axialsicherungselemente 22", 24", die insbesondere zumindest im Wesentlichen analog zueinander ausgebildet sind. Die Axialsicherungselemente 22", 24" sind bevorzugt einteilig miteinander ausgebildet. Vorzugsweise bilden die zwei Axialsicherungselemente 22", 24" einen c-förmigen Sicherungsbügel. Die Axialsicherungselemente 22", 24" sind vorzugsweise dazu vorgesehen, in Klemmausnehmungen 106", 108" der Schnellspannvorrichtung 76" einzugreifen, insbesondere in einem an der Abtriebseinheit 16" angeordneten Zustand der Sicherungseinheit 20". Die Axialsicherungselemente 22", 24" sind vorzugsweise als Rastelemente, insbesondere als Rasthaken, ausgebildet.

Im Unterschied zu der in der Beschreibung der Figuren 1 bis 7 beschriebenen Sicherheitseinheit 20' weist die in den Figuren 8 und 9 dargestellte Sicherungseinheit 20" das zumindest eine Axialsicherungselement 22", 24", insbesondere die zumindest zwei Axialsicherungselemente 22", 24", auf, das/die beweglich an einem Grundkörper der Sicherungseinheit 20" gelagert ist/sind. Die zumindest zwei Axialsicherungselemente 22", 24" sind vorzugsweise gemeinsam relativ zum Grundkörper der Sicherungseinheit 20" beweglich gelagert, insbesondere infolge der einteiligen Ausgestaltung der zumindest zwei Axialsicherungselemente 22", 24". Das zumindest eine Axialsicherungselement 22", 24", insbesondere die zumindest zwei Axialsicherungselemente 22", 24", weist/weisen zumindest eine Bewegungsachse 164" auf, entlang derer das zumindest eine Axialsicherungselement 22", 24", insbesondere die zumindest zwei Axialsicherungselemente 22", 24", beweglich gelagert ist/sind. Vorzugsweise ist/sind das zumindest eine Axialsicherungselement 22", 24", insbesondere die zumindest zwei Axialsicherungselemente 22", 24", translatorisch, insbesondere linear, beweglich entlang der Bewegungsachse 164" am Grundkörper der Sicherungseinheit 20" gelagert. Die Bewegungsachse 164" des zumindest einen Axialsicherungselements 22", 24", insbesondere der zumindest zwei Axialsicherungselemente 22", 24", verläuft zumindest im Wesentlichen parallel, insbesondere koaxial, zu einer Mittelachse 140", insbesondere einer Rotationsachse, der Sicherungseinheit 20". Es ist jedoch auch denkbar, dass das zumindest eine Axialsicherungselement 22", 24", insbesondere die zumindest zwei Axialsicherungselemente 22", 24", zusätzlich um die Bewegungsachse 164" schwenkbar relativ zum Grundkörper der Sicherungseinheit 20" am Grundkörper der Sicherungseinheit 20" beweglich gelagert ist/sind.

Der Grundkörper der Sicherungseinheit 20" zumindest weist ein Bewegungsführungselement 156", 158", insbesondere eine Führungsnut, auf, das dazu vorgesehen ist, das zumindest eine Axialsicherungselement 22", 24" bei einer Bewegung relativ zum Grundkörper der Sicherungseinheit 20" zu führen. Vorzugsweise wird das Bewegungsführungselement 156", 158" zumindest teilweise von zumindest einem, insbesondere am Grundkörper der Sicherungseinheit 20" angeordneten, Formschlusselement 48", 50" der Sicherungseinheit 20" begrenzt, das zu einer Übertragung von einer Antriebskraft und/oder eines Antriebsdrehmoments auf das Schleifmittel 12" vorgesehen ist. Bevorzugt wird das Bewegungsführungselement 156", 158" zumindest teilweise von dem zumindest einen Formschlusselement 48", 50" und zumindest einem, insbesondere am Grundkörper der Sicherungseinheit 20" angeordneten, Einführfortsatz 150" der Sicherungseinheit 150" begrenzt.

Der Grundkörper der Sicherungseinheit 20" weist zumindest ein Bewegungsbegrenzungselement 160", 162" auf, das dazu vorgesehen ist, eine maximale Bewegungsstrecke des zumindest einen Axialsicherungselement 22", 24", insbesondere der zumindest zwei Axialsicherungselemente 22", 24", relativ zum Grundkörper der Sicherungseinheit 20" zu begrenzen. Das Bewegungsbegrenzungselement 160" ist vorzugsweise als Fortsatz ausgebildet. Es ist jedoch auch denkbar, dass das Bewegungsbegrenzungselement 160" als Bodenplatte des Grundkörpers der Sicherungseinheit 20" ausgebildet ist, insbesondere als eine einer Spannfläche 52" des Grundkörpers der Sicherungseinheit 20" abgewandte Bodenplatte des Grundkörpers der Sicherungseinheit 20". Bevorzugt ist das zumindest eine Bewegungsbegrenzungselement 160" an einer Lagerausnehmung 166" des Grundkörpers der Sicherungseinheit 20", insbesondere an einem Randbereich der Lagerausnehmung 166" angeordnet. Das zumindest eine Axialsicherungselement 22", 24", insbesondere die zumindest zwei Axialsicherungselemente 22", 24", ist/sind vorzugsweise in einem am Grundkörper der Sicherungseinheit 20" angeordneten Zustand des zumindest einen Axialsicherungselements 22", 24", insbesondere der zumindest zwei Axialsicherungselemente 22", 24", beweglich in der Lagerausnehmung 166" angeordnet. Bevorzugt erstreckt sich das Bewegungsbegrenzungselement 160" entlang einer quer, insbesondere zumindest im Wesentlichen senkrecht, zur Mittelachse 140" des Grundkörpers der Sicherungseinheit 20" zumindest teilweise in die Lagerausnehmung 166" hinein. Das Bewegungsbegrenzungselement 160" ist vorzugsweise dazu vorgesehen, eine Einführöffnung der Lagerausnehmung 166" zu verengen, insbesondere um ein ungewolltes Herausfallen oder Herausnehmen des zumindest einen Axialsicherungselements 22", 24", insbesondere der zumindest zwei Axialsicherungselemente 22", 24", aus der Lagerausnehmung 166" zu verhindern und/oder zu erschweren. Das Bewegungsbegrenzungselement 160" ist vorzugsweise einteilig an den Grundkörper der Sicherungseinheit 20" angeformt. Es ist jedoch auch denkbar, dass das Bewegungsbegrenzungselement 160" separat zum Grundkörper der Sicherungseinheit 20" ausgebildet ist und mittels einer, einem Fachmann als sinnvoll erscheinenden form- und/oder kraftschlüssigen Verbindung am Grundkörper der Sicherungseinheit 20" fixiert ist. Zu einer Anordnung des zumindest einen Axialsicherungselements 22", 24", insbesondere der zumindest zwei Axialsicherungselemente 22", 24", in der Lagerausnehmung 166" erfolgt vorzugsweise eine elastische Verformung des Bewegungsbegrenzungselements 160" und/oder des zumindest einen Axialsicherungselements 22", 24", insbesondere der zumindest zwei Axialsicherungselemente 22", 24".

Ferner weist der Grundkörper der Sicherungseinheit 20" zumindest ein weiteres Bewegungsbegrenzungselement 162" auf, das dazu vorgesehen ist, eine maximale Bewegungsstrecke des zumindest einen Axialsicherungselement 22", 24", insbesondere der zumindest zwei Axialsicherungselemente 22", 24", relativ zum Grundkörper der Sicherungseinheit 20" zu begrenzen. Das weitere Bewegungsbegrenzungselement 162" begrenzt vorzugsweise die Lagerausnehmung 166" auf einer dem Bewegungsbegrenzungselement 162" abgewandten Seite der Lagerausnehmung 166". Das weitere Bewegungsbegrenzungselement 162" bildet vorzugsweise eine die Lagerausnehmung 166" begrenzende Anschlagfläche für das zumindest eine Axialsicherungselement 22", 24", insbesondere für die zumindest zwei Axialsicherungselemente 22", 24". Vorzugsweise ist das weitere Bewegungsbegrenzungselement 162" auf einer der Spannfläche 52" abgewandten Seite an dem Einführfortsatz 150" angeordnet, insbesondere einteilig daran angeformt.

In einem an der Schnellspannvorrichtung 76" angeordneten und mittels einer Klemmeinrichtung 84" der Schnellspannvorrichtung 76" befestigten Zustand der Schleifmittelvorrichtung 10" liegt das zumindest eine Axialsicherungselement 22", 24", insbesondere die zumindest zwei Axialsicherungselemente 22", 24", an dem weiteren Bewegungsbegrenzungselement 162" an (vgl. Figur 8). Vorzugsweise liegt ein die zumindest zwei Axialsicherungselemente 22", 24" einteilig miteinander verbindender Mittelsteg 168" der Sicherungseinheit 20" in einem an der Schnellspannvorrichtung 76" angeordneten und mittels einer Klemmeinrichtung 84" der Schnellspannvorrichtung 76" befestigten Zustand der Schleifmittelvorrichtung 10" an dem weiteren Bewegungsbegrenzungselement 162" an. In einem Lösezustand der Schnellspannvorrichtung 76" und/oder in einem von der Schnellspannvorrichtung 76" abgenommenen Zustand der Sicherungseinheit 20" liegt das zumindest eine Axialsicherungselement 22", 24", insbesondere die zumindest zwei Axialsicherungselemente 22", 24", an dem Bewegungsbegrenzungselement 160" an. Bevorzugt liegt der die zumindest zwei Axialsicherungselemente 22", 24" einteilig miteinander verbindender Mittelsteg 168" der Sicherungseinheit 20" in einem Lösezustand der Schnellspannvorrichtung 76" und/oder in einem von der Schnellspannvorrichtung 76" abgenommenen Zustand der Sicherungseinheit 20" an dem Bewegungsbegrenzungselement 160" an. Es ist jedoch auch denkbar, dass das zumindest eine Axialsicherungselement 22", 24", insbesondere die zumindest zwei Axialsicherungselemente 22", 24", in einem Lösezustand der Schnellspannvorrichtung 76" und/oder in einem von der Schnellspannvorrichtung 76" abgenommenen Zustand der Sicherungseinheit 20"an dem Bewegungsbegrenzungselement 160" anliegt, insbesondere in Abhängigkeit von einer räumlichen Ausrichtung der Sicherungseinheit 20" und einer daraus resultierenden Wirkung einer Schwerkraft auf das zumindest eine Axialsicherungselement 22", 24", insbesondere die zumindest zwei Axialsicherungselemente 22", 24".Hinsichtlich weiterer Merkmale und Funktionen der in den Figuren 8 und 9 dargestellten Schleifmittelvorrichtung 10" darf auf die Beschreibung der Figuren 1 bis 7 verwiesen werden, die analog auf die Figuren 8 und 9 zu lesen ist.

## Patentansprüche

1. Schleifmittelvorrichtung, insbesondere Schleiftellervorrichtung oder Stütztellervorrichtung, zu einer Anordnung von zumindest einem Schleifmittel, insbesondere von zumindest einer Schleifscheibe, an einer tragbaren Werkzeugmaschine (14), insbesondere einer Schleifmaschine, mit zumindest einer, insbesondere gewindefrei an einer Abtriebseinheit (16) der tragbaren Werkzeugmaschine (14) fixierbaren, Aufnahmeeinheit (18), insbesondere Schleifteller oder Stützteller, an der zumindest ein Schleifmittel anordenbar ist, und mit zumindest einer, insbesondere getrennt von der Aufnahmeeinheit (18) ausgebildeten, Sicherungseinheit (20) zumindest zu einer axialen Fixierung der Aufnahmeeinheit (18) und/oder des Schleifmittels an der Abtriebseinheit (16) der tragbaren Werkzeugmaschine (14), **wobei** die Sicherungseinheit (20) zumindest zu einer werkzeuglosen axialen Fixierung der Aufnahmeeinheit (18) und/oder des Schleifmittels an der Abtriebseinheit (16) der tragbaren Werkzeugmaschine (14) und/oder zumindest zu einer werkzeuglosen axialen Fixierung des Schleifmittels an der Aufnahmeeinheit (18) vorgesehen ist, wobei die Sicherungseinheit (20) zumindest ein Axialsicherungselement (22, 24) umfasst, das beweglich an und relativ zu einem Grundkörper der Sicherungseinheit (20) gelagert ist, **dadurch gekennzeichnet, dass** eine Bewegungsachse des zumindest einen Axialsicherungselements zumindest im Wesentlichen parallel zur Mittelachse, insbesondere einer Rotationsachse, der Sicherungseinheit verläuft.

2. Schleifmittelvorrichtung nach Anspruch 1, **dadurch gekennzeichnet, dass** die Sicherungseinheit (20) zumindest ein Axialsicherungselement (22, 24) umfasst, das zu einer werkzeuglosen axialen Fixierung der Aufnahmeeinheit (18) und/oder des Schleifmittels zumindest teilweise in die Aufnahmeeinheit (18), insbesondere in eine Aufnahmeausnehmung (26) der Aufnahmeeinheit (18) eingreift.

3. Schleifmittelvorrichtung nach Anspruch 1 oder 2, **dadurch gekennzeichnet, dass** die Sicherungseinheit (20) zumindest ein Axialsicherungselement (22, 24) umfasst, das federelastisch auslenkbar ausgebildet ist.

4. Schleifmittelvorrichtung nach einem der vorhergehenden Ansprüche, **dadurch gekennzeichnet, dass** der Grundkörper der Sicherungseinheit (20) zumindest ein Bewegungsführungselement (156, 158), insbesondere eine Führungsnut, aufweist, das dazu vorgesehen ist, das zumindest eine Axialsicherungselement (22, 24) bei einer Bewegung relativ zum Grundkörper der Sicherungseinheit (20) zu führen.

5. Schleifmittelvorrichtung nach einem der vorhergehenden Ansprüche, **dadurch gekennzeichnet, dass** der Grundkörper der Sicherungseinheit (20) zumindest ein Bewegungsbegrenzungselement (160, 162) aufweist, das dazu vorgesehen ist, eine maximale Bewegungsstrecke des zumindest einen Axialsicherungselement (22, 24) relativ zum Grundkörper der Sicherungseinheit (20) zu begrenzen.

6. Schleifmittelvorrichtung nach einem der vorhergehenden Ansprüche, **dadurch gekennzeichnet, dass** die Aufnahmeeinheit (18) in einem Nahberiech einer Aufnahmeausnehmung (26), in die die Sicherungseinheit (20) zumindest teilweise eingreift, zumindest ein Drehmomentübertragungselement (28, 30) aufweist, das zumindest in einem an der Abtriebseinheit (16) der tragbaren Werkzeugmaschine (14) angeordneten Zustand der Aufnahmeeinheit (18) dazu vorgesehen ist, mit einem Drehmomentübertragungsfortsatz (32, 34) der tragbaren Werkzeugmaschine (14) zusammenzuwirken.

7. Schleifmittelvorrichtung nach einem der vorhergehenden Ansprüche, **dadurch gekennzeichnet, dass** die Aufnahmeeinheit (18) zumindest ein Drehmomentübertragungselement (28, 30) aufweist, das zumindest eine Anlagefläche (36, 38) aufweist, die zumindest im Wesentlichen parallel zu einer Radialrichtung (40) der Aufnahmeeinheit (18) verläuft.

8. Schleifmittelvorrichtung nach einem der vorhergehenden Ansprüche, **dadurch gekennzeichnet, dass** die Aufnahmeeinheit (18) zumindest eine Aufnahmeausnehmung (26) aufweist, in die die Sicherungseinheit (20) zumindest teilweise eingreift, wobei zumindest ein die Aufnahmeausnehmung (26) zumindest teilweise begrenzender Randbereich der Aufnahmeeinheit (18) zumindest eine Kontaktfläche (42, 44) zu einer Übertragung einer Antriebskraft und/oder eines Antriebsdrehmoments auf die Sicherungseinheit (20) bildet.

9. Schleifmittelvorrichtung nach einem der vorhergehenden Ansprüche, **dadurch gekennzeichnet, dass** die Aufnahmeeinheit (18) zumindest eine Positionierausnehmung (46) zu einer Positionierung der Sicherungseinheit (20) aufweist, wobei die Positionierausnehmung (46) angrenzend an eine Aufnahmeausnehmung (26) der Aufnahmeeinheit (18) angeordnet ist, die zumindest teilweise von zumindest einem Randbereich der Aufnahmeeinheit (18) begrenzt ist, der zu einer Übertragung von einer Antriebskraft und/oder eines Antriebsdrehmoments auf die Sicherungseinheit (20) vorgesehen ist.

10. Schleifmittelvorrichtung nach einem der vorhergehenden Ansprüche, **dadurch gekennzeichnet, dass** die Sicherungseinheit (20) zumindest ein Formschlusselement (48, 50) zu einer Übertragung von einer Antriebskraft und/oder eines Antriebsdrehmoments auf das Schleifmittel aufweist.

11. Schleifmittelvorrichtung nach Anspruch 10, **dadurch gekennzeichnet, dass** das Formschlusselement (48, 50) an einer Spannfläche (52) der Sicherungseinheit (20) angeordnet ist, die zu einer axialen Fixierung des Schleifmittels an der Aufnahmeeinheit (18) und/oder an der Abtriebseinheit (16) an dem Schleifmittel anlegbar ist.

12. Einsatzwerkzeug mit einer Schleifmittelvorrichtung nach einem der Ansprüche 1 bis 11 und mit einem an der Schleifmittelvorrichtung anordenbaren Schleifmittel.

13. Werkzeugmaschinensystem mit zumindest einer tragbaren Werkzeugmaschine (14), insbesondere Schleifmaschine, und mit zumindest einem Einsatzwerkzeug nach Anspruch 12, das mittels einer Schnellspannvorrichtung (76) der tragbaren Werkzeugmaschine (14) an einer Abtriebseinheit (16) der tragbaren Werkzeugmaschine (14) fixierbar ist.

## Claims

1. Grinding means device, in particular grinding-pad device or backing-pad device, for arranging at least one grinding means, in particular at least one grinding disc, on a portable power tool (14), in particular a power grinder, having at least one receiving unit (18), in particular a grinding pad or a backing pad, which can be fixed, in particular threadlessly, to an output unit (16) of the portable power tool (14) and on which at least one grinding means can be arranged, and having at least one securing unit (20), in particular realized separately from the receiving unit (18), at least for the purpose of axially fixing the receiving unit (18) and/or the grinding means to the output unit (16) of the portable power tool (14), wherein the securing unit (20) is provided at least to axially fix the receiving unit (18) and/or the grinding means to the output unit (16) of the portable power tool (14) without use of any tools, and/or at least to axially fix the grinding means to the receiving unit (18) without use of any tools, wherein the securing unit (20) comprises at least one axial securing element (22, 24) that is mounted so as to be movable on and relative to a basic body of the securing unit (20), **characterized in that** a movement axis of the at least one axial securing element runs at least substantially parallel to the central axis, in particular a rotation axis, of the securing unit.

2. Grinding means device according to Claim 1, **characterized in that** the securing unit (20) comprises at least one axial securing element (22, 24) that, for the purpose of axially fixing the receiving unit (18) and/or the grinding means without use of any tools, engages, at least partly, in the receiving unit (18), in particular in a receiving recess (26) of the receiving unit (18).

3. Grinding means device according to Claim 1 or 2, **characterized in that** the securing unit (20) comprises at least one axial securing element (22, 24) that is realized so as to be resiliently deflectable.

4. Grinding means device according to one of the preceding claims, **characterized in that** the basic body of the securing unit (20) has at least one movement guide element (156, 158), in particular a guide groove, which is provided to guide the at least one axial securing element (22, 24) during a movement relative to the basic body of the securing unit (20).

5. Grinding means device according to one of the preceding claims, **characterized in that** the basic body of the securing unit (20) has at least one movement delimitation element (160, 162) which is provided to delimit a maximum movement distance of the at least one axial securing element (22, 24) relative to the basic body of the securing unit (20).

6. Grinding means device according to one of the preceding claims, **characterized in that**, in a region close to a receiving recess (26) in which the securing unit (20) engages, at least partly, the receiving unit (18) has at least one torque transmission element (28, 30), which is provided, at least when the receiving unit (18) has been arranged on the output unit (16) of the portable power tool (14), to act in combination with a torque transmission extension (32, 34) of the portable power tool (14).

7. Grinding means device according to one of the preceding claims, **characterized in that** the receiving unit (18) has at least one torque transmission element (28, 30) having at least one locating surface (36, 38) that runs at least substantially parallel to a radial direction (40) of the receiving unit (18).

8. Grinding means device according to one of the preceding claims, **characterized in that** the receiving unit (18) has at least one receiving recess (26), in which the securing unit (20) engages, at least partly, wherein at least one peripheral region of the receiving unit (18) that at least partly delimits the receiving recess (26) forms at least one contact surface (42, 44) for transmitting a driving force and/or a driving torque to the securing unit (20).

9. Grinding means device according to one of the preceding claims, **characterized in that** the receiving unit (18) has at least one positioning recess (46) for positioning the securing unit (20), wherein the positioning recess (46) is arranged so as to adjoin a receiving recess (26) of the receiving unit (18) that is delimited, at least partly, by at least one peripheral region of the receiving unit (18) that is provided to transmit a driving force and/or a driving torque to the securing unit (20).

10. Grinding means device according to one of the preceding claims, **characterized in that** the securing unit (20) has at least one positive-engagement element (48, 50) for transmitting a driving force and/or a driving torque to the grinding means.

11. Grinding means device according to Claim 10, **characterized in that** the positive-engagement element (48, 50) is arranged on a tensioning surface (52) of the securing unit (20) that can be applied to the grinding means for the purpose of axially fixing the grinding means to the receiving unit (18) and/or to the output unit (16).

12. Insert tool having a grinding-means device according to one of Claims 1 to 11, and having a grinding means that can be arranged on the grinding-means device.

13. Power-tool system having at least one portable power tool (14), in particular grinding machine, and having at least one insert tool according to Claim 12, which can be fixed to an output unit (16) of the portable power tool (14) by means of a quick-change tensioning device (76) of the portable power tool (14).

## Revendications

1. Dispositif à moyen abrasif, notamment dispositif à disque abrasif ou dispositif à disque d'appui, pour un agencement d'au moins un moyen abrasif, notamment d'au moins un disque abrasif, sur une machine-outil portable (14), notamment une ponceuse, avec au moins une unité de réception (18), notamment un disque abrasif ou un disque d'appui, pouvant être fixée, notamment sans filetage sur une unité de sortie (16) de la machine-outil portable (14), sur laquelle au moins un moyen abrasif peut être agencé, et avec au moins une unité de sécurisation (20), réalisée notamment séparément de l'unité de réception (18), au moins pour une fixation axiale de l'unité de réception (18) et/ou du moyen abrasif sur l'unité de sortie (16) de la machine-outil portable (14), l'unité de sécurisation (20) étant prévue au moins pour une fixation axiale sans outil de l'unité de réception (18) et/ou du moyen abrasif sur l'unité de sortie (16) de la machine-outil portable (14) et/ou au moins pour une fixation axiale sans outil du moyen abrasif sur l'unité de réception (18), l'unité de sécurisation (20) comprenant au moins un élément de sécurisation axiale (22, 24) qui est monté de manière mobile sur et par rapport à un corps de base de l'unité de sécurisation (20), **caractérisé en ce qu'**un axe de mouvement de l'au moins un élément de sécurisation axiale s'étend au moins essentiellement parallèlement à l'axe central, notamment à un axe de rotation, de l'unité de sécurisation.

2. Dispositif à moyen abrasif selon la revendication 1, **caractérisé en ce que** l'unité de sécurisation (20) comprend au moins un élément de sécurisation axiale (22, 24) qui, pour une fixation axiale sans outil de l'unité de réception (18) et/ou du moyen abrasif, s'engage au moins partiellement dans l'unité de réception (18), notamment dans un évidement de réception (26) de l'unité de réception (18).

3. Dispositif à moyen abrasif selon la revendication 1 ou 2, **caractérisé en ce que** l'unité de sécurisation (20) comprend au moins un élément de sécurisation axiale (22, 24) qui est réalisé pour pouvoir être dévié de manière élastique.

4. Dispositif à moyen abrasif selon l'une quelconque des revendications précédentes, **caractérisé en ce que** le corps de base de l'unité de sécurisation (20) présente au moins un élément de guidage de mouvement (156, 158), notamment une rainure de guidage, qui est prévu pour guider l'au moins un élément de sécurisation axiale (22, 24) lors d'un mouvement par rapport au corps de base de l'unité de sécurisation (20).

5. Dispositif à moyen abrasif selon l'une quelconque des revendications précédentes, **caractérisé en ce que** le corps de base de l'unité de sécurisation (20) présente au moins un élément de limitation de mouvement (160, 162) qui est prévu pour limiter une distance de mouvement maximale de l'au moins un élément de sécurisation axiale (22, 24) par rapport au corps de base de l'unité de sécurisation (20).

6. Dispositif à moyen abrasif selon l'une quelconque des revendications précédentes, **caractérisé en ce que** l'unité de réception (18) présente, dans une zone proche d'un évidement de réception (26) dans lequel l'unité de sécurisation (20) s'engage au moins partiellement, au moins un élément de transmission de couple (28, 30) qui, au moins dans un état de l'unité de réception (18) agencé sur l'unité de sortie (16) de la machine-outil portable (14), est prévu pour coopérer avec un prolongement de transmission de couple (32, 34) de la machine-outil portable (14).

7. Dispositif à moyen abrasif selon l'une quelconque des revendications précédentes, **caractérisé en ce que** l'unité de réception (18) présente au moins un élément de transmission de couple (28, 30) présentant au moins une surface d'application (36, 38) qui s'étend au moins essentiellement parallèlement à une direction radiale (40) de l'unité de réception (18).

8. Dispositif à moyen abrasif selon l'une quelconque des revendications précédentes, **caractérisé en ce que** l'unité de réception (18) présente au moins un évidement de réception (26) dans lequel l'unité de sécurisation (20) s'engage au moins partiellement, au moins une zone de bord de l'unité de réception (18) délimitant au moins partiellement l'évidement de réception (26) formant au moins une surface de contact (42, 44) pour une transmission d'une force d'entraînement et/ou d'un couple d'entraînement à l'unité de sécurisation (20).

9. Dispositif à moyen abrasif selon l'une quelconque des revendications précédentes, **caractérisé en ce que** l'unité de réception (18) présente au moins un évidement de positionnement (46) pour un positionnement de l'unité de fixation (20), l'évidement de positionnement (46) étant agencé de manière adjacente à un évidement de réception (26) de l'unité de réception (18) qui est au moins partiellement délimité par au moins une zone de bord de l'unité de réception (18) qui est prévue pour une transmission d'une force d'entraînement et/ou d'un couple d'entraînement à l'unité de sécurisation (20).

10. Dispositif à moyen abrasif selon l'une quelconque des revendications précédentes, **caractérisé en ce que** l'unité de sécurisation (20) présente au moins un élément de complémentarité de forme (48, 50) pour une transmission d'une force d'entraînement et/ou d'un couple d'entraînement au moyen abrasif.

11. Dispositif à moyen abrasif selon la revendication 10, **caractérisé en ce que** l'élément de complémentarité de forme (48, 50) est agencé sur une surface de serrage (52) de l'unité de sécurisation (20), qui peut être appliquée sur le moyen abrasif pour une fixation axiale du moyen abrasif sur l'unité de réception (18) et/ou sur l'unité de sortie (16).

12. Outil rapporté avec un dispositif à moyen abrasif selon l'une quelconque des revendications 1 à 11 et un moyen abrasif pouvant être agencé sur le dispositif à moyen abrasif.

13. Système de machine-outil avec au moins une machine-outil portable (14), notamment une ponceuse, et avec au moins un outil rapporté selon la revendication 12, qui peut être fixé à une unité de sortie (16) de la machine-outil portable (14) au moyen d'un dispositif de serrage rapide (76) de la machine-outil portable (14).
